# EUROPÄISCHE PATENTSCHRIFT

(11) **EP 3 428 080 B1**
(45) Veröffentlichungstag und Bekanntmachung des Hinweises auf die Patenterteilung: **12.02.2020**
(21) Anmeldenummer: 18182206.5
(22) Anmeldetag: 06.07.2018
(51) Int. Cl.: B65B 69/00, B65G 69/18

(54) **ANSCHLUSSVORRICHTUNG**
CONNECTION DEVICE
DISPOSITIF DE RACCORDEMENT

(30) Priorität: 08.07.2017 DE 102017211703; 20.07.2017 DE 102017212510
(43) Veröffentlichungstag der Anmeldung: 16.01.2019
(73) Patentinhaber: Hecht Technologie GmbH, 85276 Pfaffenhofen (DE)
(72) Erfinder: HOLZNER, Wolfgang, 85276 Pfaffenhofen / OT Uttenhofen (DE); SONDERMEIER, Florian, 85276 Pfaffenhofen (DE)
(74) Vertreter: Kilian Kilian & Partner

(56) Entgegenhaltungen:
- EP-A1- 0 835 829
- EP-A1- 3 000 739
- EP-A2- 1 958 900
- DE-A1-102005 014 996

## Beschreibung

Die Erfindung betrifft eine Anschlussvorrichtung zum Anschließen einer schlauchförmigen Folie an eine Einrichtung, insbesondere eine Anschlussvorrichtung zum kontaminationsfreien Überführen von pulver-/granulatartigen Stoffen zwischen der schlauchförmigen Folie und der Einrichtung.

Aus dem Stand der Technik sind Anschlussvorrichtungen zum Anschließen schlauchförmiger Folien allgemein bekannt.

Beispielsweise zeigt die internationale Patentanmeldung WO 2015/027350 A1 eine Anschlussvorrichtung zum Anschließen einer schlauchförmigen Folie. Die bekannte Anschlussvorrichtung beinhaltet an ihrer Stirnseite eine ringförmige Nut, in die ein durch eine schlauchförmige Folie gebildeter Auslauf/Einlauf eines Bigbags mittels eines Ringes gedrückt und anschließend durch eine Blähdichtung fixiert wird. Zusätzlich weist die in der genannten Patentanmeldung offenbarte Anschlussvorrichtung eine manuell zu öffnende Bride auf, über die der Auslauf/Einlauf zusätzlich fixiert werden kann.

Die ringförmige Nut sitzt an der Stirnseite der Anschlussvorrichtung und öffnet sich in axialer Richtung der Folie, wodurch es dazu kommen kann, dass das gehandhabte, pulverförmige Produkt, das in oder aus dem Bigbag strömt, sich in der Nut sammelt. Solche Ansammlungen können bei Änderung des gehandhabten Produktes zu nicht erwünschten Kreuzkontaminationen führen und machen häufige Spülungen der Nut notwendig.

Vor diesem Hintergrund ist es Aufgabe der Erfindung eine Anschlussvorrichtung zu schaffen, bei der Ansammlungen eines gehandhabten Produktes in höherem Maß vermieden werden.

Diese Aufgabe wird mit einer Anschlussvorrichtung gemäß Patentanspruch 1 gelöst. Bevorzugte Ausführungsformen sind Gegenstand der abhängigen Patentansprüche.

*Gemäß einem Aspekt der Erfindung weist eine Anschlussvorrichtung zum Anschließen einer schlauchförmigen Folie*/*Schlauchfolie an eine Einrichtung folgende Merkmal auf:*
*einen Grundkörper, der einen Kanal ausbildet, wobei der Kanal sich entlang einer Kanalachse erstreckt und an einer Öffnung des Grundkörpers endet und nach Außen mündet;*
*eine Klemmeinrichtung, die die Öffnung des Grundkörpers umläuft und eingerichtet ist, die schlauchförmige Folie nach Überziehen über den Grundkörper in einem Klemmraum derart festzuklemmen, dass die schlauchförmige Folie abgedichtet befestigt ist und ein pulver-*/*granulatförmiges Produkt zwischen dem Grundkörper und der schlauchförmigen Folie kontaminationsfrei überführt werden kann; und*
*ein Einführmittel, das den Grundkörper und die über den Grundkörper gezogene schlauchförmige Folie zumindest teilweise umläuft, wobei das Einführmittel eingerichtet ist, sich radial zu der Kanalachse derart zu versetzen, dass es die schlauchförmige Folie radial zusammenschnürt und hierdurch in den Klemmraum einführt.*

In der Schüttgüter herstellenden oder verarbeitenden Industrie ist es notwendig, pulver-/granulatförmige Produkte von einem Behälter in eine Einrichtung oder von einer Einrichtung in einen Behälter zu überführen. Hierbei werden oftmals schlauchförmige Folien verwendet, die die Einrichtung und den Behälter miteinander verbinden. Die verwendeten schlauchförmigen Folien können entweder Teil des Behälters selbst sein, wie beispielsweise der Einlass/Auslass eines Bigbags oder der Innensack eines Fasses, oder können von einem Schlauchfolienvorrat abgeschnittene schlauchförmige Folienstücke sein, die einerseits an der Einrichtung und andererseits an dem Behälter so befestigt werden, dass das Produkt überführt werden kann.

Beispielsweise ist die erfindungsgemäße Anschlussvorrichtung so dimensioniert, dass schlauchförmige Folien mit Durchmessern von 420 mm bis 600 mm angeschlossen werden können.

Bei den Einrichtungen, für die sich die erfindungsgemäße Anschlussvorrichtung eignet bzw. an denen die Anschlussvorrichtung bevorzugt montiert wird, kann es sich - nicht abschließend - beispielsweise handeln um:
eine Produktionsanlage oder Silo, in die ein Bigbag oder Fass zu entleeren ist,
eine Produktionsanlage oder Silo, aus der heraus das Produkt in einen Bigbag oder ein Fass zu füllen ist, und
einen Isolator, an dem ein zu entleerendes Fass zu befestigen ist.

Vor diesem Hintergrund handelt es sich bei der erfindungsgemäßen Anschlussvorrichtung bevorzugt um eine Vorrichtung zum Befüllen und/oder Entleeren von Behältern, die mit der schlauchförmigen Folie - wie im Vorhergehenden erläutert - ausgestattet sind.

Die Montage der Anschlussvorrichtung erfolgt bevorzugt über einen Befestigungsflansch, an dem nach Montage der Kanal in die Einrichtung über eine Öffnung mündet.

Die Klemmeinrichtung ist erfindungsgemäß so ausgestaltet, dass die schlauchförmige Folie abgedichtet befestigt ist und somit das Produkt kontaminationsfrei überführt werden kann bzw. der Behälter kontaminationsfrei entleert/befüllt werden kann.

Dadurch, dass die Klemmeinrichtung der erfindungsgemäßen Anschlussvorrichtung die Öffnung umläuft und aus diesem Grund der Klemmraum sich radial zu der Kanalachse nach außen öffnet, kann verhindert werden, dass das Produkt, das in Richtung der Kanalachse durch den Grundkörper strömt, sich in dem Klemmraum ansammelt.

Gleichzeitig ist es problemlos möglich, die schlauchförmige Folie radial in den Klemmraum einzuführen, indem das Einführmittel radial zu der Kanalachse versetzt wird und die schlauchförmige Folie zusammenschnürt.

Die Kanalachse kann bevorzugt der Längsachse des Grundkörpers entsprechen und/oder, wenn der Kanal symmetrisch ist, der entsprechenden Symmetrieachse. Bevorzugt ist der Kanal im Schnitt senkrecht zur Kanalachse kreisförmig ausgebildet, sodass die Kanalachse bevorzugt der Mittenachse entspricht.

Das Einführmittel und die Klemmeinrichtung können so ausgebildet sein, dass das Einführmittel nach Einführen der schlauchförmigen Folie in dem Klemmraum verbleibt und erst dann entfernt wird, wenn eine neue schlauchförmige Folie anzuschließen ist, oder nach dem Einführen der schlauchförmigen Folie sofort wieder aus dem Klemmraum entfernt wird.

*Bevorzugt ist die Klemmeinrichtung dazu eingerichtet, den Klemmraum zu öffnen und nach dem radialen Einführen der schlauchförmigen Folie wieder zu schließen, um die schlauchförmige Folie in dem Klemmraum festzuklemmen.*

Die Klemmeinrichtung ist insbesondere dazu eingerichtet, den Klemmraum derart in Richtung der Kanalachse zu öffnen, dass der Klemmraum radial zu der Kanalachse nach außen geöffnet und nach innen (beispielsweise durch eine Außenoberfläche des Grundkörpers) geschlossen ist, und nach dem radialen Einführen der schlauchförmigen Folie in Richtung der Kanalachse wieder zu schließen, um die schlauchförmige Folie in dem Klemmraum festzuklemmen.

*Weiterhin bevorzugt kann die Klemmeinrichtung zumindest einen bewegbaren Klemmring aufweisen; wobei*
*die Klemmeinrichtung eingerichtet ist, den Klemmring zum Schließen des Klemmraumes in einer ersten Richtung der Kanalachse zu bewegen und anschließend den Klemmring zum Öffnen des Klemmraumes in einer zu der ersten Richtung entgegengesetzten Richtung der Kanalachse zu bewegen.*

Der Klemmring kann beispielsweise über Gleitstreifen auf einer Außenoberfläche des Grundkörpers gleitend gelagert sein.

Durch Verstellen des Klemmringes öffnet und schließt die Klemmeinrichtung den Klemmraum, wobei das Einführmittel derart radial versetzbar ist, dass es die schlauchförmige Folie zusammenschnürt und zusammen mit dieser in den (geöffneten) Klemmraum eingeführt wird. Bevorzugt wird das Einführmittel aus dem Klemmraum wieder entfernt, bevor dieser zum Festklemmen der schlauchförmigen Folie geschlossen wird.

*Alternativ zu dem Klemmring kann die Klemmeinrichtung der Anschlussvorrichtung zumindest eine in Richtung der Kanalachse aufweitbare Blähdichtung aufweisen; wobei*
*die Klemmeinrichtung eingerichtet ist, die Blähdichtung zum Öffnen und Schließen des Klemmraumes zu betätigen.*

*Bevorzugt beinhaltet die Klemmeinrichtung der Anschlussvorrichtung den erwähnten Klemmring, wobei*
*die Klemmeinrichtung zumindest ein Betätigungselement aufweist, das den Grundkörper zumindest teilweise umläuft und durch einen Anwender verstellt werden kann; und*
*die Klemmeinrichtung eingerichtet ist, dass sich der Klemmring bei Verstellen des Betätigungselements bewegt.*

Das Betätigungselement kann beispielsweise ein manueller Betätigungshebel, oder ein motorisch (elektrisch oder programmatisch) betriebenes Betätigungselement sein, dass zum Öffnen und Schließen des Klemmraumes den Klemmring bewegt.

*Bevorzugt weist der Grundkörper der Anschlussvorrichtung einen Befestigungsflansch auf, an dem das Betätigungselement über eine Gleitlagerung derart befestigt ist, dass das Betätigungselement durch den Anwender um die Kanalachse herum verstellt werden kann; wobei*
*die Klemmeinrichtung zumindest einen Stössel aufweist, der an dem Betätigungselement über eine Kulissenführung gleitend gelagert befestigt ist, den Befestigungsflansch durchsetzt und an dem Klemmring befestigt ist; und*
*bei Verstellen des Betätigungselements in einer ersten Betätigungsrichtung der Stößel aufgrund der Kulissenführung den Klemmring zum Schließen des Klemmraumes in der ersten Richtung bewegt, und bei Verstellen des Betätigungselements in einer zweiten Betätigungsrichtung der Stößel aufgrund der Kulissenführung den Klemmring zum Öffnen des Klemmraumes in der zweiten Richtung bewegt.*

Die Gleitlagerung zur Befestigung des Betätigungselementes an dem Befestigungsflansch ist bevorzugt auf dem Betätigungselement angeordnet und mit diesem verschraubt, wobei ein Befestigungsbolzen einerseits in die Gleitlagerung entsprechend gleitend eingesetzt ist und andererseits in den Befestigungsflansch eingeschraubt ist. Die Gleitlagerung ist bevorzugt gebogen ausgebildet, sodass das Betätigungselement um die Kanalachse gedreht werden kann.

Das Betätigungselement ist bevorzugt ein ringartiges Element und über eine Vielzahl von Gleitlagerungen und entsprechende Befestigungsbolzen an dem Befestigungsflansch befestigt.

Das Betätigungselement haltert bevorzugt eine Vielzahl von Kulissenführungen, an denen jeweils ein Stößel, der den Befestigungsflansch durchsetzt, befestigt ist. Jedem Stößel können mehrere Kulissenführungen, die radial zur Kanalachse hintereinander angeordnet sind, zugeordnet sein.

*Bevorzugt weist die erfindungsgemäße Anschlussvorrichtung weiterhin auf:*
*eine Einführhalterung, die die Klemmeinrichtung umläuft und das Einführmittel derart haltert, dass das Einführmittel in den Klemmraum radial zu der Kanalachse versetzbar ist, um die schlauchförmige Folie in den Klemmraum einzuführen; und*
*eine erste Dichtung, die den Grundkörper umläuft und eingerichtet ist, eine neue schlauchförmige Folie abgedichtet zu befestigen, wobei die erste Dichtung derart angeordnet ist, dass die neue schlauchförmige Folie so befestigt werden kann, dass sie einen in dem Klemmraum festgeklemmten schlauchförmigen Folienrest, der von einer zuvor angeschlossenen schlauchförmigen Folie stammt, einschließt.*

Die Einführhalterung ist bevorzugt als Ring ausgebildet und umläuft die Klemmeinrichtung derart, dass sie das Einführmittel in Umfangsrichtung der Klemmeinrichtung haltert.

Bevorzugt ist die erste Dichtung in die Einführhalterung integriert bzw. ist sie Teil der Einführhalterung. Bevorzugt ist die erste Dichtung eine Blähdichtung.

Bei der bestimmungsgemäßen Verwendung tritt die Situation auf, dass in dem Klemmraum der Folienrest einer zuvor angeschlossenen schlauchförmigen Folie festgeklemmt ist. Die erste Dichtung ist in Bezug auf den Klemmraum so angeordnet, dass eine neue schlauchförmige Folie über den Folienrest hinaus über den Grundkörper gezogen und derart abgedichtet werden kann, dass sie den Folienrest vollständig einschließt.

Bevorzugt ist das *Einführmittel ein Seil; wobei*
*die Einführhalterung ringförmig ist und einen Ringraum aufweist, und*
*das Seil in den Ringraum von außerhalb eingeführt und anschließend durch Ziehen von außerhalb derart radial zu der Kanalachse zusammengeschnürt werden kann, dass es in den Klemmraum versetzt wird und hierdurch die schlauchförmige Folie in den Klemmraum einführt.*

Die erste Dichtung ist bevorzugt in Richtung der Kanalachse auf einer Seite des Ringraumes angeordnet. Bevorzugt ist eine zweite Dichtung in Richtung der Kanalachse auch auf der anderen Seite des Ringraumes angeordnet.

Der Ringraum ist in radialer Richtung zur Kanalachse bevorzugt durch eine flexible Abdeckung abgedeckt, die ein Einführen des Seils in den Ringraum erleichtert.

*Die Einführhalterung der Anschlussvorrichtung weist bevorzugt ein Seileinführungselement auf, das radial zu der Kanalachse verstellbar die Einführhalterung durchsetzt und einen ersten Seilführungsweg und einen zweiten Seilführungsweg definiert; wobei,*
*wenn sich das Seileinführungselement in einer Ausgangsstellung befindet und das Seil über den ersten Seilführungsweg eingeführt wird, das Seil in den Ringraum geleitet und nach Durchlaufen des Ringraums über den zweiten seilführungsweg wieder nach Außen geleitet wird; und wobei*
*bei dem Zusammenschnüren des Seils das Seilführungselement aus seiner Ausgangsstellung heraus zusammen mit dem Seil in den Klemmraum versetzt wird.*

Das Seileinführungselement ist bevorzugt eine Platte, die die Einführhalterung durchsetzt und radial zur Kanalachse verstellbar bzw. versetzbar ist.

Der erste und zweite Seilführungsweg hat in dem Seileinführungselement bevorzugt einen gebogenen Verlauf, sodass, wenn der Anwender das Seil in den ersten Seilführungsweg einschiebt, das Seil in den Ringraum gleitet. Nach Durchlaufen des Ringraums bzw. Umlaufen des Grundkörpers gleitet das Seil in den zweiten Seilführungsweg und anschließend nach außen, wo es für den Anwender wieder zugänglich/greifbar ist.

Der erste und zweite Seilführungsweg können asymmetrisch ausgebildet sein, d.h. der zweite Seilführungsweg kann an einem Abschnitt, an dem das Seil aus dem Ringraum in den zweiten Seilführungsweg übertritt, beispielsweise breiter ausgebildet sein als ein Abschnitt des ersten Seilführungswegs, an dem das Seil aus dem ersten Seilführungsweg in den Ringraum übertritt.

Das Seileinführungselement bzw. die Platte ist radial zur Kanalachse versetzbar. Wenn es sich in der Ausgangsstellung befindet, münden der erste und zweite Seilführungsweg in den Ringraum.

Wenn der Anwender durch Ziehen der Seilenden das Seil zusammenschnürt und hierdurch radial zur Kanalachse aus dem Ringraum in den Klemmraum versetzt, wird das Seileinführungselement bzw. die Platte mit seinem der Kanalachse zugewandten Ende ebenfalls in den Klemmraum (manuell und/oder aufgrund des Zusammenschnürens) versetzt, sodass die Abschnitte des ersten und zweiten Seilführungswegs, an denen das Seil vor Versetzen des Seileinführungselements in den Ringraum übertrat, sich ebenfalls in dem Klemmraum befinden.

Das Seileinführungselement kann über einen Rückstellmechanismus versetzbar gelagert sein, der beispielsweise Rückstellfedern beinhaltet. Wenn der Anwender das Seileinführungselement loslässt, sorgt der Rückstellmechanismus dafür, dass das Seileinführungselement in seine Ausgangsstellung zurückkehrt.

*Bevorzugt weist die Einführhalterung der Anschlussvorrichtung eine manuelle oder motorische Zugvorrichtung auf, die eingerichtet ist, das Seil, bevorzugt zusammen mit dem Seileinführungselement, in den Klemmraum zu versetzen.*

Die Zugvorrichtung unterstützt den Anwender insbesondere bei dem Zusammenschnüren des Seils bzw. bei dem Versetzen des Seils in den Klemmraum. Hierfür können die Seilenden des Seils an der Zugvorrichtung befestigt werden, und anschließend kann die Zugvorrichtung durch den Anwender für das Zusammenschnüren des Seils betätigt werden.

Antriebe für die motorische Zugvorrichtung können beispielsweise pneumatische oder elektrische Antriebe sein.

Wenn der Anwender die Zugvorrichtung betätigt, wird das Seil durch Zusammenschnüren in den Ringraum versetzt.

*Bevorzugt ist die Zugvorrichtung eine manuelle Zugvorrichtung (mit Handkraft), beispielsweise ein betätigbarer Hebel, und weist zumindest eine Seilklemme auf, in der das Seil für das Ziehen einklemmbar ist.*

Beispielsweise kann jedes Seilende des Seils, das von außen für den Anwender an dem Seileinführungselement zugänglich ist, in einer eigens für das entsprechende Seilende zugeordneten und zwei Klemmbacken aufweisende Seilklemme befestigt werden. Insoweit ist für jedes Seilende eine eigens hierfür vorgesehene Seilklemme vorhanden.

Alternativ kann die Seilklemme als Klemmbackeneinrichtung so ausgestaltet sein, dass sie zwei Klemmbacken/Klemmplatten aufweist, zwischen die beide Seilenden zusammen eingeführt und durch Verstellen der Klemmbacken/Klemmplatten festgeklemmt werden.

Die Seilklemme bzw. Seilklemmen können bevorzugt auf einer drehbar gelagerten Platte befestigt sein, die es dem Anwender ermöglicht, die Seilklemme/Seilktemmen auf dieselbe senkrecht zur Kanalachse stehende Ebene wie die Seilenden des Seils zu verstellen.

*Bevorzugt ist die Einführhalterung in Richtung der Kanalachse durch eine Führungseinrichtung verfahrbar und trägt einen Dichtflansch mit einer Dichtung, über die die schlauchförmige Folie, wenn die Einführhalterung maximal an den Grundkörper heran verfahren ist, an einem die Öffnung festlegenden Rand des Grundkörpers abdichtbar ist.*

Die Führungseinrichtung ist bevorzugt aus einem oder einer Vielzahl von Hubzylindern ausgebildet, der/die für das Verfahren der Einführhalterung aus- und eingefahren werden können.

Die Dichtung des Dichtflansches ist bevorzugt eine Blähdichtung, die für das Abdichten der schlauchförmigen Folie an dem Rand des Grundkörpers betätigt werden kann.

Der Dichtflansch kann bevorzugt durch eine Vielzahl von Armabschnitten, die an der Einführhalterung befestigt sind, gehalten werden.

Die Einführhalterung kann den Dichtflansch, der die schlauchförmige Folie axial zur Kanalachse über seine Dichtung an dem Grundkörper abdichten kann, sowohl für den Fall, dass die Anschlussvorrichtung zur Entleerung eines Behälters bestimmt ist, als auch für den Fall, dass die Anschlussvorrichtung zur Befüllung eines Behälters bestimmt ist, tragen.

Wenn die Anschlussvorrichtung zur Befüllung eines Behälters bestimmt ist, kann der Dichtflansch alternativ auch durch einen Dichtring (bsp. mit Blähdichtung) ersetzt werden, der die schlauchförmige Folie nicht axial zur Kanalachse sondern radial zur Kanalachse an der Öffnung des Grundkörpers abdichtet.

*Bevorzugt ist die Dichtung des Dichtflansches oder des Dichtrings derart eingerichtet, dass sie die schlauchförmige Folie abdichtet, wenn der Klemmraum geschlossen wird.*

Diese bevorzugte Ausgestaltung der Dichtung des Dichtflansches ist eine Sicherheitsmaßnahme, die dafür sorgt, dass die schlauchförmige Folie gegenüber dem Grundkörper abgedichtet ist, auch wenn die Klemmung der schlauchförmigen Folie in dem Klemmraum fehlschlägt.

*Weiterhin ist die erste Dichtung derart eingerichtet ist, dass sie die schlauchförmige Folie abdichtet, wenn der Klemmraum geöffnet wird.*

Auch hierbei handelt es sich um eine Sicherheitsmaßnahme, die dafür sorgt, dass der Grundkörper über seine Öffnung nicht gegenüber der Außenumgebung, in der sich der Anwender befindet, geöffnet ist, wenn der Anwender den Klemmraum öffnet.

Die erfindungsgemäße Anschlussvorrichtung ist nicht darauf eingeschränkt, dass das Einführmittel ein Seil sein muss.

*Bevorzugt weist das Einführmittel eine Vielzahl von Einführelementen auf, die um die Klemmeinrichtung herum angeordnet sind und jeweils durch die Einführhalterung radial zu der Kanalachse versetzbar gelagert sind und die jeweils an einem dem Grundkörper zugewandten Ende mindestens eine zu der Kanalachse radiale Aussparung aufweisen; wobei*
*die Einführelemente eingerichtet sind, radial zu der Kanalachse derart versetzt zu werden, dass sie mit dem Ende die schlauchförmige Folie radial zusammenschnüren und hierdurch in den Klemmraum einführen; und*
*die Klemmeinrichtung eingerichtet ist, Teile*/*Abschnitte der schlauchförmigen Folie, die sich jeweils in den Aussparungen befinden, festzuklemmen, bevor die Einführelemente aus dem Klemmraum herausgezogen werden und der Klemmraum geschlossen ist*/*wird.*

Bei den Einführelementen kann es sich folglich bevorzugt um einzelne Einführelemente handeln, die in Umfangsrichtung um den Grundkörper herum in bestimmten Abständen zueinander angeordnet sind.

Jedes Einführelemente ist radial zu der Kanalachse versetzbar, um die schlauchförmige Folie insgesamt zusammenzuschnüren. Die Einführelemente sind bevorzugt in Umfangsrichtung in solchen Abständen zueinander angeordnet, dass ihre mit der radialen Aussparung versehenen Enden (nach radialem Versetzen der Einführelemente) innerhalb des Klemmraumes (in Umfangsrichtung um die Kanalachse herum) noch einen bestimmten Abstand zueinander aufweisen. Ein Einschneiden der schlauchförmigen Folie wird hierdurch verhindert.

Weiterhin alternativ kann das Einführelement ein elastischer Ring sein, beispielsweise ein O-Ring, der entlang seiner Umfangsrichtung in zur Kanalachse radial versetzbare Klemmen derart eingesetzt ist, dass die Klemmen den elastischen Ring zum Zusammenschnüren der schlauchförmigen Folie entspannen können, wodurch der Ring in den Klemmraum versetzt wird, und zum Entfernen aus dem Klemmraum wieder spannen können/radial aufweiten können.

Eine bestimmungsgemäße Verwendung der erfindungsgemäßen Anschlussvorrichtung stellt sich wie folgt dar:
Wenn es sich nicht um den aller ersten Anschluss einer schlauchförmigen Folie handelt, ist in dem Klemmraum ein Folienrest festgeklemmt, der von einer zuvor angeschlossenen schlauchförmigen Folie stammt.

In einem weiteren Schritt wird die Einführhalterung von dem Grundkörper entfernt, beispielsweise durch Ausfahren der Hubzylinder.

Der Anwender kann nunmehr eine neue anzuschließende schlauchförmige Folie über den Grundkörper ziehen, sodass sie über den Klemmraum hinaus über den Grundkörper ragt.

Die neue schlauchförmige Folie wird nunmehr gegenüber dem Grundkörper abgedichtet, beispielsweise durch Heranfahren der Einführhalterung und Betätigen der ersten Dichtung, wodurch der Folienrest durch die neue schlauchförmige Folie vollständig eingeschlossen wird.

Im nächsten Schritt kann der Anwender den Klemmraum öffnen und den Folienrest entfernen.

Für das Entfernen des Folienrests kann der Grundkörper einen seitlichen Eingriff aufweisen, wobei ein solcher seitlicher Eingriff insbesondere dann vorgesehen werden kann, wenn die Anschlussvorrichtung für Bigbags vorgesehen ist.

Wenn die Anschlussvorrichtung allerdings an einer Einrichtung montiert ist, die selbst Eingriffe aufweist, wie beispielsweise ein Isolator mit Handschuhen, ist der Eingriff (des Grundkörpers) nicht notwendig.

Der Anwender führt in diesem Zustand nunmehr die neue schlauchförmige Folie in den Klemmraum ein, indem die schlauchförmige Folie durch das Einführmittel zusammengeschnürt wird.

Anschließend schließt der Anwender den Klemmraum, beispielsweise durch Betätigen des Betätigungselementes. Das Einführmittel kann in dem Klemmraum verbleiben oder vorher entfernt werden.

Bevorzugt wird anschließend die Dichtung des Dichtflansches zusätzlich betätigt, um die schlauchförmige Folie an dem Rand des Grundkörpers abgedichtet zu fixieren.

Das zu überführende pulverförmige/granulatförmige Produkt kann nunmehr zwischen der schlauchförmigen Folie und dem Grundkörper überführt werden, beispielsweise durch Entleeren oder Befüllen des Bigbags.

Anschließend wird die schlauchförmige Folie zweifach abgebunden und zwischen den Abbindestellen durchtrennt. Der Teil der durchtrennten schlauchförmigen Folie, der an dem Grundkörper verbleibt, bildet den Folienrest, der bei einem erneuten Anschließen einer schlauchförmigen Folie wieder entfernt wird.

Im Folgenden wird eine bevorzugte Ausführungsform einer erfindungsgemäßen Anschlussvorrichtung unter Bezug auf die beigefügten Figuren erläutert.
**Figur 1** zeigt eine perspektivische Ansicht einer erfindungsgemäßen Anschlussvorrichtung;
**Figur 2** zeigt eine perspektivische Ansicht eines Grundkörpers der erfindungsgemäßen Anschlussvorrichtung;
**Figur 3** zeigt eine weitere perspektivische Ansicht des Grundkörpers;
**Figur 4a** zeigt eine isolierte Ansicht einer Klemmeinrichtung der erfindungsgemäßen Anschlussvorrichtung;
**Figur 4b** zeigt ein Betätigungselement der Klemmeinrichtung aus Figur 4a, wobei das Betätigungselement mit zwei Kulissenführungen je Stößel ausgestattet ist;
**Figur 5** zeigt den Grundkörper der erfindungsgemäßen Anschlussvorrichtung, wobei die Klemmeinrichtung montiert ist;
**Figur 6** zeigt eine weitere perspektivische Ansicht der erfindungsgemäßen Anschlussvorrichtung;
**Figuren 7** **und** **8** zeigen perspektivische Ansichten einer Einführhalterung der erfindungsgemäßen Anschlussvorrichtung;
**Figur 9** zeigt eine Schnittansicht der Einführhalterung aus Figuren 7 und 8 mit einer Schnittebene senkrecht zu einer Kanalachse A;
**Figur 10** zeigt einen vergrößerten Bereich der Schnittansicht aus Figur 9;
**Figur 11** zeigt eine Schnittansicht der Einführhalterung, der Klemmeinrichtung und des Grundkörpers mit einer Schnittebene, in der die Kanalachse A liegt;
**Figuren 12a und 12b** zeigen eine alternative Zugvorrichtung;
**Figuren 13a und 13b** zeigen perspektivische Ansichten des Grundkörpers der erfindungsgemäßen Anschlussvorrichtung zur Erläuterung eines seitlichen Eingriffs in den Grundkörper, wobei der Eingriff mit einer Endlosschlauchfolie oder einem Foliensack verschlossen ist;
**Figuren 14a, 14b** **und** **15** zeigen perspektivische Ansichten des Grundkörpers der erfindungsgemäßen Anschlussvorrichtung zur Erläuterung einer Reinigungseinrichtung (WIP - wash in place);
**Figur 16a** zeigt eine perspektivische Ansicht der erfindungsgemäßen Anschlussvorrichtung zur Erläuterung einer weiteren Reinigungseinrichtung (CIP-clean in place); und
**Figur 16b** zeigt eine Schnittansicht der erfindungsgemäßen Anschlussvorrichtung aus Figur 16a (CIP).

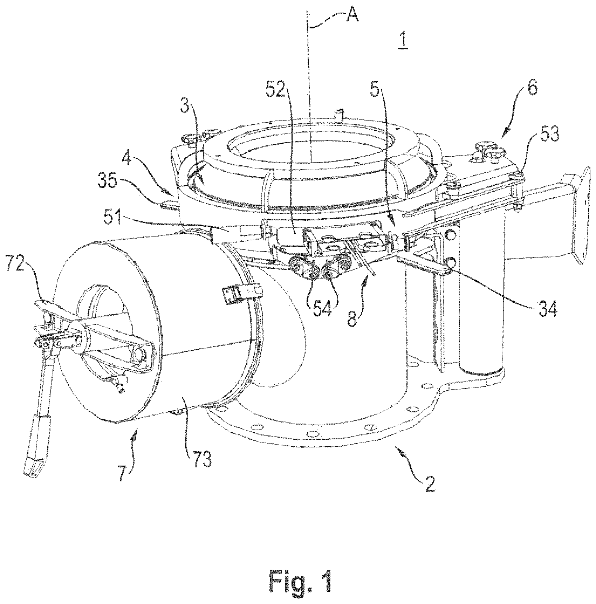

In Figur 1 ist eine erfindungsgemäße Anschlussvorrichtung 1 in einer perspektivischen Ansicht dargestellt.

Die Anschlussvorrichtung 1 beinhaltet einen Grundkörper 2, eine Klemmeinrichtung 3, eine Einführhalterung 4, eine Zugvorrichtung 5, eine Führungseinrichtung 6 und einen seitlichen Eingriff 7.

Die Anschlussvorrichtung 1 dient erfindungsgemäß zum Anschließen einer schlauchförmigen Folie an eine Einrichtung, um beispielsweise einen Behälter mit der Einrichtung zu verbinden.

In der Schüttgüter herstellenden Industrie werden beispielsweise pulver-/granulatförmige Produkte aus Einrichtungen, wie Produktionsanlagen oder Silos, in Behälter, wie beispielsweise sogenannte Bigbags oder Fässer gefüllt. Die gefüllten Behälter werden anschließend auf Seiten der Schüttgüter verarbeitenden Industrie in Einrichtungen, wie beispielsweise Verarbeitungsanlagen oder Silos, entleert, um das Produkt einer weiteren Verarbeitung zu unterziehen oder für eine spätere Verarbeitung zu speichern.

Bei beiden Vorgängen, d.h. der Befüllung oder Entleerung, werden die Behälter mit der entsprechenden Einrichtung vorzugsweise über eine schlauchförmige Folie verbunden. Die schlauchförmige Folie kann Teil des Behälters selbst oder eine einfache schlauchförmige Verbindungsfolie sein, die sich zwischen dem Behälter und der Einrichtung erstreckt. Beispielsweise kann es sich bei der schlauchförmigen Folie um den Einlass/Auslass eines Bigbags oder um den Einlass/Auslass eines Innensackes eines Fasses handeln.

Die erfindungsgemäße Anschlussvorrichtung 1 erlaubt ein zuverlässiges und sicheres Anschließen einer solchen schlauchförmigen Folie.

### (Grundkörper 2)

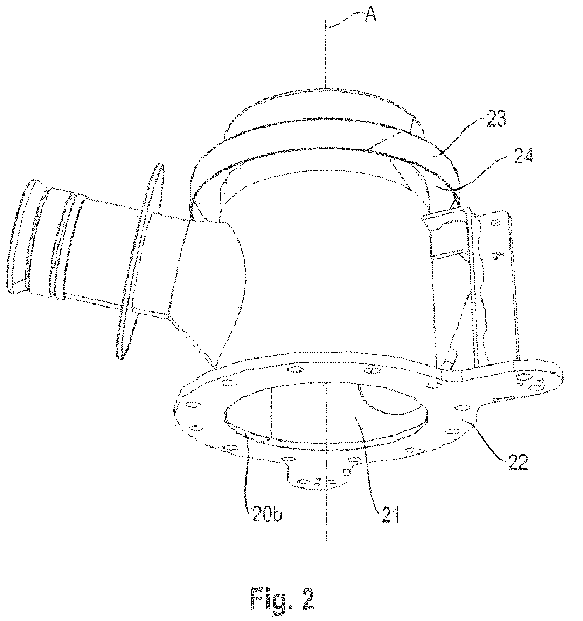

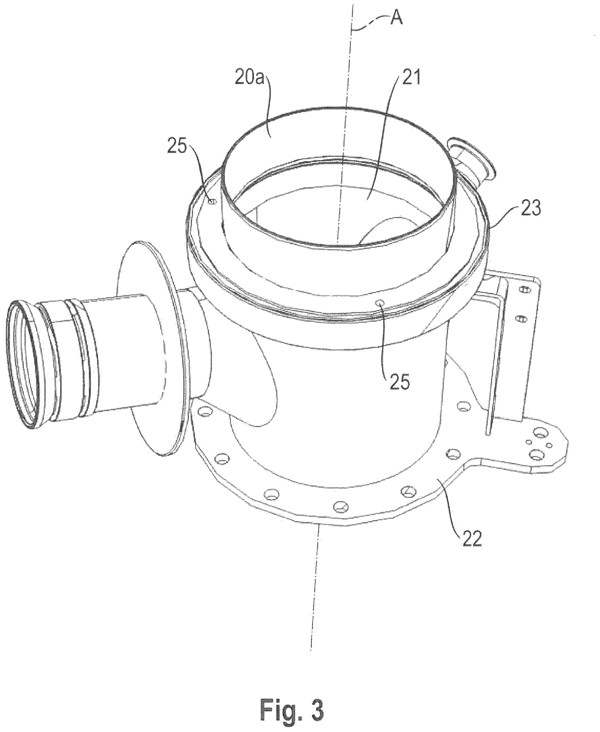

Figuren 2 und 3 zeigen den Grundkörper 2 der erfindungsgemäßen Anschlussvorrichtung 1 jeweils in einer perspektivischen Darstellung, wobei die Klemmeinrichtung 3, Einführhalterung 4, Zugvorrichtung 5 und Führungseinrichtung 6 nicht montiert sind.

Der Grundkörper 2 bildet in seinem Innenraum einen Kanal 21 aus, der sich entlang einer Kanalachse A erstreckt. Die Kanalachse A entspricht der Längsachse des Grundkörpers 2. Bei bestimmungsgemäßer Verwendung der erfindungsgemäßen Anschlussvorrichtung 1 strömt das Produkt in Richtung der Kanalachse A durch den Grundkörper 2 bzw. den Kanal 21.

Der Kanal 21 mündet an einem Anschlussende der Anschlussvorrichtung 1, an dem die schlauchförmige Folie bestimmungsgemäß anzuschließen ist, über eine Öffnung 20a des Grundkörpers 2 in die Außenumgebung der Anschlussvorrichtung 1.

An einem entgegengesetzten Ende des Grundkörpers 2 befindet sich ein Montageflansch 22, über den die Anschlussvorrichtung 1 an der entsprechenden Einrichtung, beispielsweise mittels Schraubverbindungen, befestigt werden kann. Der Kanal 21 mündet an dem entgegengesetzten Ende nach Montage der Anschlussvorrichtung 1 in die genannte Einrichtung.

D.h. das handzuhabende pulver-/granulatförmige Produkt kann durch den Kanal 21 hindurch aus der bzw. in die Einrichtung strömen und an der Öffnung zwischen einer angeschlossenen schlauchförmigen Folie und dem Grundkörper überführt werden.

Der Grundkörper 2 beinhaltet darüber hinaus einen Befestigungsflansch 23, der die Öffnung 20a an dem Anschlussende umläuft und zur Befestigung der im Folgenden noch erläuterten Klemmeinrichtung 3 dient. Der Befestigungsflansch 23 ist im Längsschnitt gesehen derart L-förmig ausgebildet, dass er auf der dem Anschlussende abgewandten Seite einen Aufnahmeraum 24 ausbildet. Der Aufnahmeraum 24 ist in Figur 2 gut ersichtlich.

Der bevorzugte seitliche Eingriff 7 wird später noch näher erläutert.

### (Klemmeinrichtung 3)

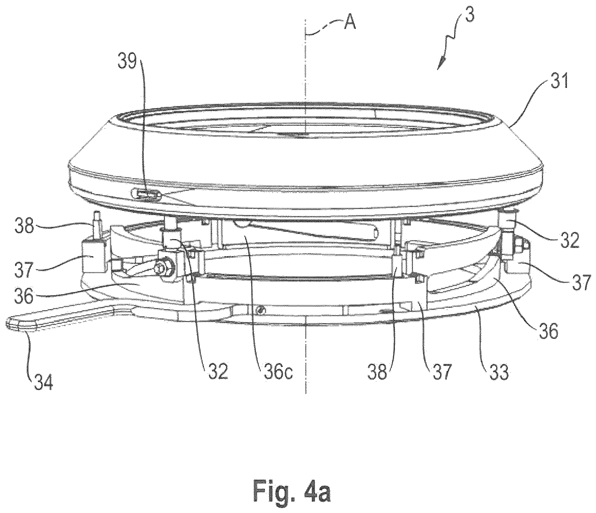

Figur 4a zeigt die Klemmeinrichtung 3 der erfindungsgemäßen Anschlussvorrichtung 1 in isolierter Darstellung.

Die Klemmeinrichtung 3 beinhaltet einen Klemmring 31, der im montierten Zustand der Klemmeinrichtung 3 die an dem Anschlussende des Grundkörpers 2 liegende Öffnung 20a vollständig umläuft. Der Klemmring 31 wird von einer Vielzahl von Stößeln 32, beispielsweise von drei Stößeln gehaltert, die jeweils in dem Klemmring 31 gebildete Öffnungen durchlaufen und innerhalb des Klemmrings 31 enden.

Die Befestigung zwischen Klemmring 31 und dem jeweiligen Stößel 32 wird dadurch bewerkstelligt, dass nach Aufsetzen des Klemmringes 31 auf die Stößel 32 ein Rastelement 39 seitlich in den Klemmring 31 eingeführt wird. Jedem Stößel 32 ist ein jeweiliges Rastelement 39, das in eine dem jeweiligen Stößel 32 entsprechende seitliche Öffnung des Klemmrings 31 eingeführt ist, zugeordnet.

Das jeweilige Rastelement 39 rastet in den entsprechenden Stößel 32 derart ein, dass der Klemmring 31 mit den Stößeln 32 fest verbunden ist und durch diese in einer ersten Richtung abgesenkt und anschließend in einer entgegengesetzten Richtung wieder angehoben werden kann.

Die Klemmeinrichtung 3 beinhaltet weiterhin ein Betätigungselement 33, das aus Teilsegmenten aufgebaut ist und bevorzugt einen geschlossenen Betätigungsring bildet. Das Betätigungselement 33 kann seitlich abstehende Betätigungshebel 34, 35 aufweisen, die ein Anwender zum Verstellen des Betätigungselementes 33 greifen kann.

Das Betätigungselement 33 bildet gleichzeitig die Halterung für eine Vielzahl von Kulissenführungen 36 und Gleitlagerungen 37, wobei in dieser Ausführungsform bevorzugt jeweils drei Kulissenführungen und drei Gleitlager in entsprechenden Abständen um die Kanalachse A herum angeordnet sind.

In jeder der Gleitlagerungen 37 ist ein entsprechender Befestigungsbolzen 38 gleitend gelagert befestigt. Gleichermaßen ist in jeder der Kulissenführungen 36 einer der Stößel 32 gleitend gelagert befestigt.

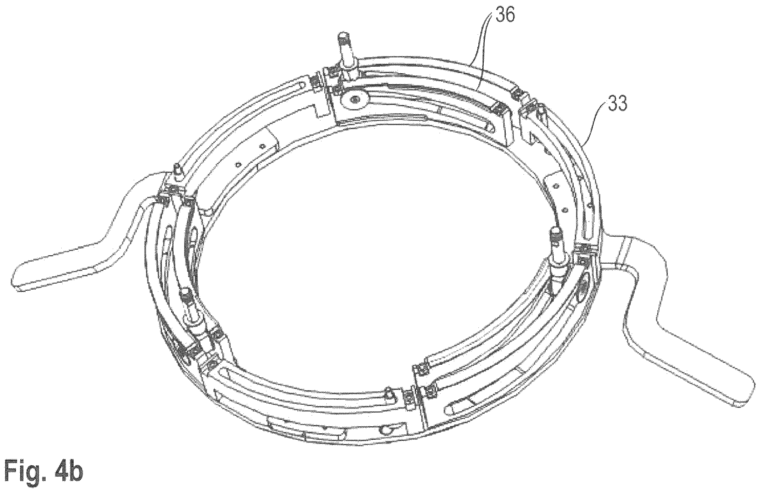

In Figur 4a ist jedem der Stößel 32 jeweils eine der Kulissenführungen 36 zugeordnet. Alternativ ist es möglich jedem der Stößel 32 zwei Kulissenführungen 36 zuzuordnen, derart, dass jeder Stößel 32 in radialer Richtung des den geschlossenen Betätigungsring bildenden Betätigungselements 33 beidseitig gehalten wird. Dies ist in Figur 4b gezeigt. Die anderen in Figur 4b gezeigten Elemente sind mit denen aus Figur 4a identisch.

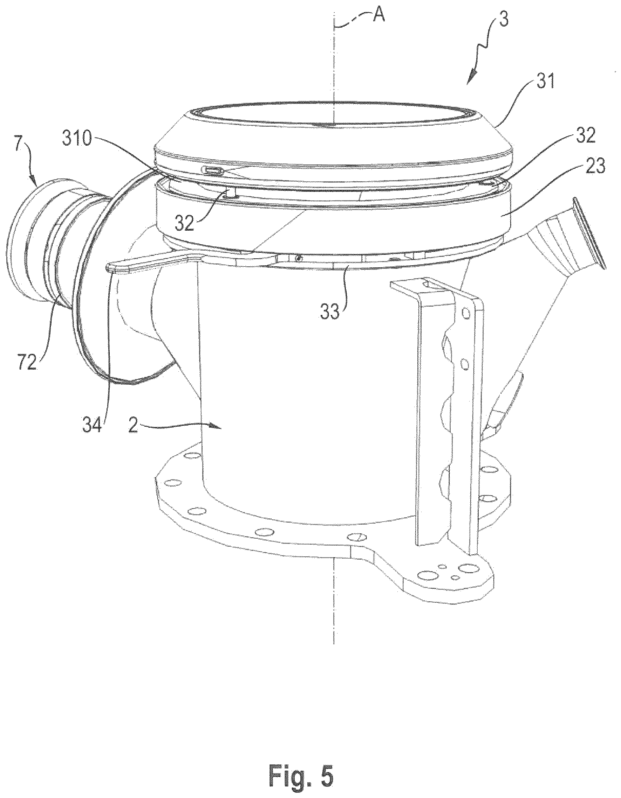

Im Folgenden wird unter Bezug auf Figur 5 die Montage bzw. die Anordnung der Klemmeinrichtung 3 erläutert.

In einem ersten Schritt werden die Teilsegmente des Betätigungselements 33 so angeordnet, dass sie auf der der Öffnung 20a abgewandten Seite des Befestigungsflansches 23 den Grundkörper 2 umlaufen. Anschließend werden die Gleitlager 37 und die Kulissenführungen 36 sowie die Betätigungshebel 34, 35 mit dem Betätigungselement 33 verbunden, beispielsweise verschraubt. Die Stößel 32 und die Befestigungsbolzen 38 sind/werden in ihre entsprechenden Lager (Gleitlager oder Kulissenführung) eingesetzt.

In diesem erreichten Zustand wird das Betätigungselement 33 angehoben und derart in den Aufnahmeraum 24 eingesetzt, dass die Stößel 32 in Richtung der Kanalachse A verlaufende Bohrungen 25 (siehe Figur 3), die in dem Befestigungsflansch 23 gebildet sind, durchsetzen bzw. durchlaufen.

Die in die Gleitlager 37 eingesetzten Befestigungsbolzen 38 werden in entsprechende Gewinde, die in dem Aufnahmeraum 24 zugänglich sind, eingeschraubt, wodurch das Betätigungselement 33 mit dem Befestigungsflansch 23 fest verbunden und von diesem sicher gehaltert wird.

Anschließend wird der Klemmring 31 auf die Stößel 32 aufgesetzt und durch Einsetzen der entsprechenden Rastelemente 39 in die seitlichen Öffnungen befestigt. Der erreichte Montagezustand entspricht Figur 5.

Der Klemmring 31 wird, wie in Figur 5 gezeigt, durch die Stößel 32 in einem bestimmten Abstand von dem Befestigungsflansch 23 gehalten bzw. gelagert, so dass zwischen dem Klemmring 31 und dem Befestigungsflansch 23 ein Klemmraum 310 ausgebildet ist.

In Figur 5 ist der Klemmraum 310 geöffnet bzw. in einem offenen Zustand.

Wenn ein Anwender in dem in Figur 5 gezeigten Zustand die Betätigungshebel 34, 35 greift und das Betätigungselement 33 um die Kanalachse A bzw. den Grundkörper 2 in einer ersten Betätigungsrichtung verstellt/dreht (in Figur 5 den Hebel 34 aus der gezeigten Stellung nach rechts verschiebt), gleiten die Stößel 32 innerhalb der Kulissenführungen 36, die auf dem Betätigungselement 33 gelagert sind, und werden durch die Ausbildung der Kulissenführungen durch die in dem Befestigungsflansch 23 gebildeten Bohrungen 25 hindurch in einer ersten Richtung entlang der Kanalachse A derart versetzt, dass der Klemmring 31 in der ersten Richtung verstellt und der Klemmraum 310 somit geschlossen wird bzw. in seinen geschlossenen Zustand überführt wird.

Wenn der Anwender anschließend das Betätigungselement 33 in die entgegengesetzte Richtung bzw. einer zweiten Betätigungsrichtung verstellt bzw. um die Kanalachse A dreht, gleiten die Stößel 32 in einer zu der ersten Richtung entgegengesetzten Richtung durch die in dem Befestigungsflansch 23 gebildeten Bohrungen, wodurch der Klemmring 31 in der entgegengesetzten Richtung bewegt wird und sich der Klemmraum 310 wieder eröffnet.

### (Einführhalterung)

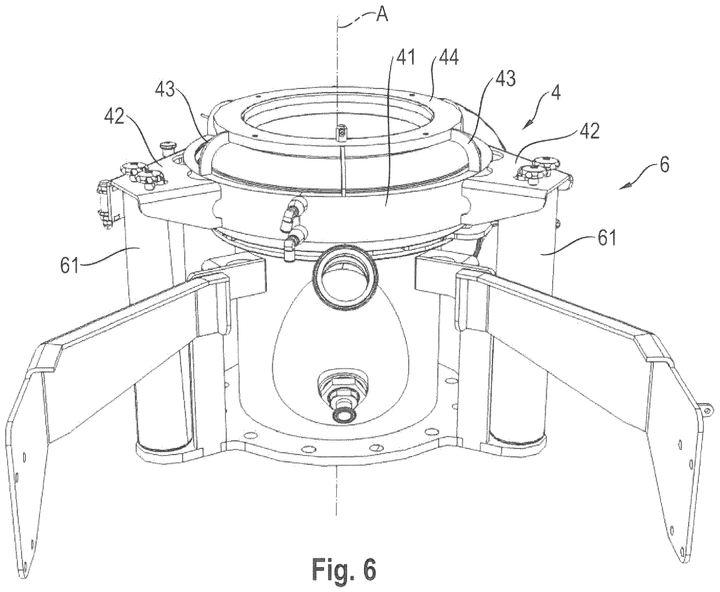

Die erfindungsgemäße Anschlussvorrichtung 1 beinhaltet ferner eine Einführhalterung 4, die unter Bezug auf Figuren 6 bis 8 beschrieben wird.

Die Einführhalterung 4 weist einen Ringabschnitt 41 auf, der so dimensioniert ist, dass er die Klemmeinrichtung 3 umläuft.

Die Einführhalterung 4 ist über Führungsabschnitte 42, die in Umfangsrichtung des Ringabschnitts 41 in einem bestimmten Abstand zueinander ausgebildet sind, an einer Führungseinrichtung 6, die zwei Hubzylinder 61 aufweist, befestigt.

Die Hubzylinder 61 sind in Richtung der Kanalachse A beispielsweise pneumatisch verstellbar, wodurch die Einführhalterung 4 axial zur Kanalachse A verfahren werden kann. In Figur 6 ist die Einführhalterung 4 maximal an den Grundkörper 2 heran verfahren bzw. sind die Hubzylinder 61 maximal eingezogen.

Die Einführhalterung 4 beinhaltet ferner Armabschnitte 43, die an dem Ringabschnitt 41 ansetzen und einen Dichtflansch 44 haltern, der in dem in Figur 6 gezeigten Zustand an die Öffnung 20a in den Grundkörper 2 herangefahren ist und über den der die Öffnung 20a definierende Rand des Grundkörpers 2 abgedichtet werden kann.

Der Dichtflansch 44 trägt auf der dem Grundkörper 2 zugewandten Seite beispielsweise eine Blähdichtung 45, die für das genannte Abdichten gegenüber der Öffnung 20a betätigt werden kann.

Der Ringabschnitt 41 trägt auf der der Klemmeinrichtung 3 zugewandten Seite eine erste Dichtung 46 und eine zweite Dichtung 47, die beide beispielsweise eine Blähdichtung sein können.

Die erste Dichtung 46 und die zweite Dichtung 47 sind axial zur Kanalachse A in einem solchen Abstand zueinander angeordnet, dass zwischen Ihnen ein Ringraum 48 ausgebildet ist. Der Ringraum 48 kann beispielsweise durch eine elastische Abdeckung abgedeckt sein, die in zur Kanalachse A axialer Richtung einseitig befestigt ist.

Der Ringabschnitt 41 weist in seiner Umfangsrichtung einen Durchgang auf, der in zur Kanalachse A axialer Richtung auf Höhe des Ringsraumes 48 liegt.

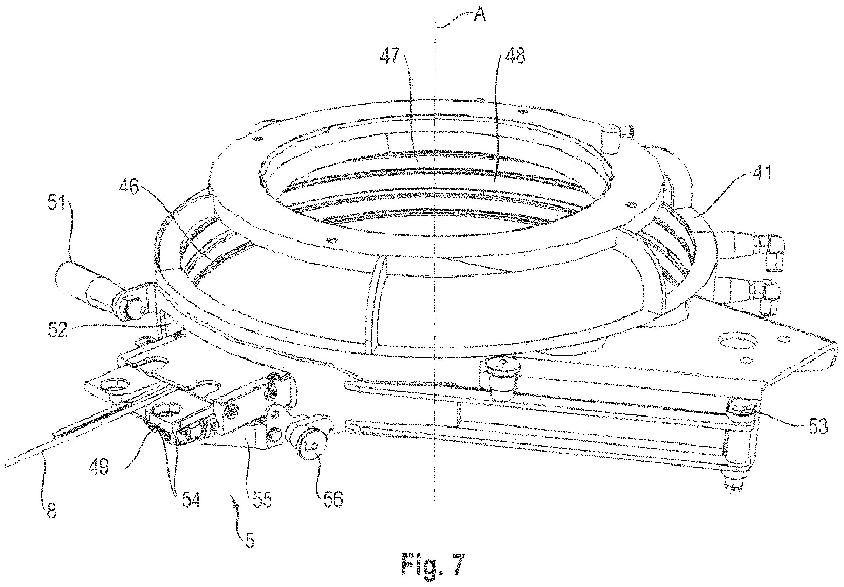

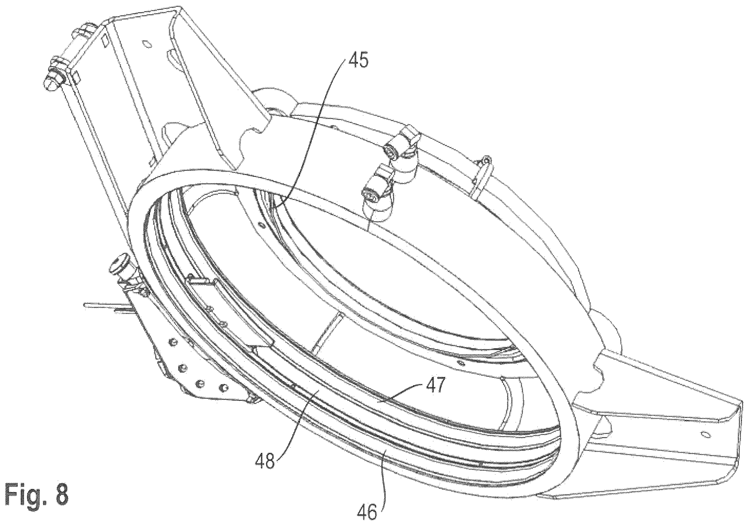

Ein im Folgenden noch näher beschriebenes Seileinführungselement 49 wird in den Durchgang des Ringabschnitts 41 eingesetzt und kann von einer in Figur 7 gezeigten Ausgangsstellung radial zur Kanalachse A in eine in Figur 8 gezeigte versetzte Stellung verstellt werden.

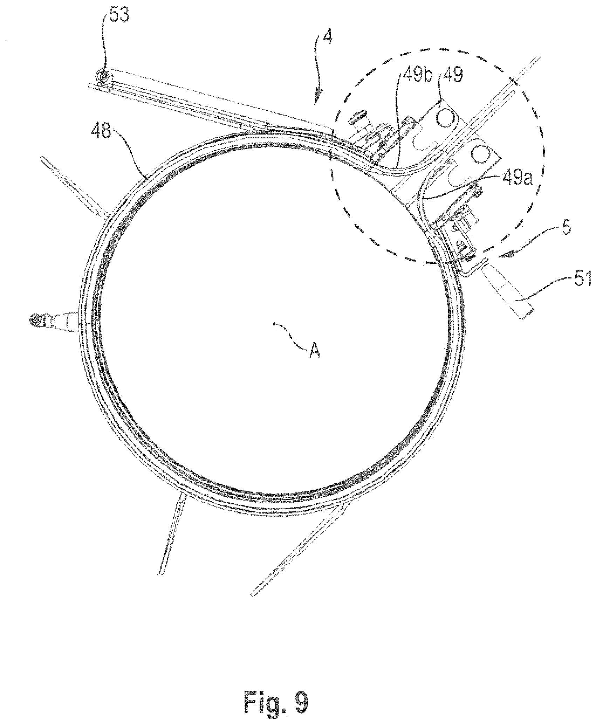

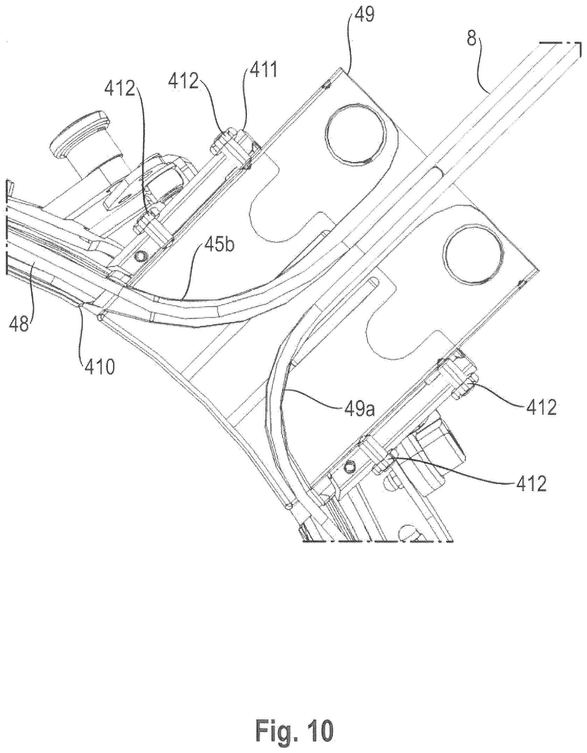

Unter Bezug auf Figuren 9 und 10 wird die Funktion des Ringraumes 48 erläutert.

Figur 9 zeigt eine Schnittansicht der Einführhalterung 4 senkrecht zur Kanalachse A auf Höhe des Ringraumes 48, und Figur 10 zeigt den in Figur 9 eingekreisten Abschnitt in einer vergrößerten Darstellung.

Das Seileinführungselement 49 ist bevorzugt eine Platte und definiert einen ersten Seilführungsweg 49a und einen zweiten Seilführungsweg 49b, die jeweils einen in der Schnittebene gebogenen Verlauf haben.

Das Seileinführungselement 49 ist in einem Führungsstück 411 radial versetzbar gelagert, wobei es in dieser Ausgangstellung bevorzugt durch Arretierstifte 412 gehalten wird. Wenn der Anwender eine bestimmte Kraft auf das Seileinführungselement 49 in zu der Kanalachse radialer Richtung aufbringt, wird die Arretierung überwunden und das Seileinführungselement 49 kann versetzt werden.

Alternativ kann das Seileinführungselement 49 bevorzugt über einen Rückstellmechanismus versetzbar gelagert sein, der beispielsweise Rückstellfedern beinhaltet. Wenn der Anwender keine Kraft auf das Seileinführungselement aufbringt, sorgt der Rückstellmechanismus dafür, dass das Seileinführungselement in seine Ausgangsstellung zurücckehrt.

Das Seileinführungselement 49 befindet sich in Figuren 9 und 10 in seiner Ausgangsstellung, wobei in dieser Stellung der erste Seilführungsweg 49a und der zweite Seilführungsweg 49b in den Ringraum 48 übergehen.

### (Einführmittel)

Der Anwender kann, wenn sich das Seileinführungselement 49 in seiner Ausgangsstellung befindet, ein Einführmittel 8, das in dieser Ausführungsform ein Seil ist, in den Ringraum 48 einbringen.

Dies wird dadurch bewerkstelligt, dass der Anwender das Seil 8 in den ersten Seilführungsweg 49a einführt. Hierbei durchläuft das Seil den ersten Seilführungsweg 49a und wird aufgrund des gebogenen Verlaufes des Seilführungswegs 49a in den Ringraum 48 eingeführt.

Wenn der Anwender das Seil 8 weiter schiebt, wird es in dem Ringraum 48 solange geführt, bis es die Kanalachse A einmal umläuft und in den zweiten Seilführungsweg 49b eintritt.

Der erste und zweite Seilführungsweg können asymmetrisch ausgebildet sein, d.h. der zweite Seilführungsweg kann an einem Abschnitt, an dem das Seil aus dem Ringraum in den zweiten Seilführungsweg übertritt, beispielsweise breiter ausgebildet sein als ein Abschnitt des ersten Seilführungswegs, an dem das Seil aus dem ersten Seilführungsweg in den Ringraum übertritt.

Nach Durchlaufen des zweiten Seilführungswegs 49b sind beide Enden des Seils 8 für den Anwender an dem Seileinführungselement zugänglich und greifbar.

Wie bereits erwähnt ist der Ringraum 48 bevorzugt durch eine (nicht zwingend notwendige) elastische Abdeckung 410, die in axialer Richtung zur Kanalachse A entweder auf Seiten der ersten oder zweiten Dichtung eingespannt ist, abgedeckt. Die Abdeckung 410 sorgt dafür, dass das Seil 8 zuverlässig in dem Ringraum 48 geführt wird, bis es die Kanalachse A einmal umlaufen hat.

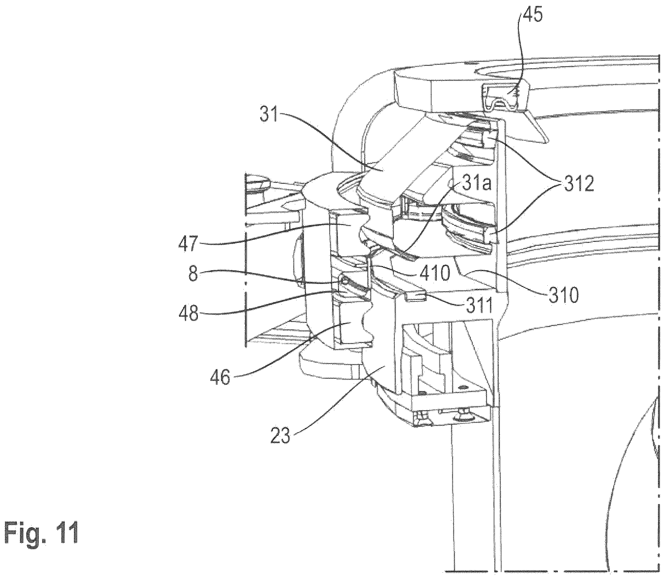

Der Zweck des Einführmittels bzw. des Seils 8 wird unter Bezug auf Figur 11 beschrieben, die einen Längsschnitt der Anschlussvorrichtung 1 entlang der Kanalachse A zeigt.

Wenn die Einführhalterung 4 über die Führungseinrichtung 6 bzw. die Hubzylinder 61 maximal an den Grundkörper 2 herangefahren und der Klemmraum 310 durch Verstellen des Klemmringes 31 in seinem offenen Zustand ist, befindet sich der Ringraum 48 in axialer Richtung zur Kanalachse A auf Höhe des Klemmraumes 310 bzw. liegt in radialer Richtung zur Kanalachse dem Klemmraum 310 gegenüber.

In diesem Zustand kann nach Einbringen des Seils das Seileinführungselement 49 aus seiner Ausgangsstellung (siehe Figur 9) heraus in seine versetzte Stellung (siehe Figur 8) verstellt werden, wodurch ein Ende des Seileinführungselements 49, das der Klemmeinrichtung 3 zugewandt ist, in den Klemmraum 310 verstellt bzw. versetzt wird.

Hierbei wird das Seil 8 an den Übergängen zwischen dem Seileinführungselement 49 und dem Ringraum 48 unter Überwindung der Abdeckung 410 mit in den Klemmraum 310 versetzt. Das heißt die Seilführungswege 49a, 49b befinden sich an dem der Klemmeinrichtung 3 zugewandten Ende des Seileinführungselements 49 nunmehr in dem Klemmraum 310.

Wenn der Anwender in diesem Zustand an den Seilenden des Seils 8, die an dem Seileinführungselement 49 außen zugänglich sind, anzieht, wird das Seil 8 innerhalb des Ringraumes 48 zusammengeschnürt, wodurch es nach Überwinden des Widerstandes der Abdeckung 410 in den Klemmraum 310 versetzt wird.

Eine schlauchförmige Folie, die in Figur 11 nicht gezeigt ist und die über den Grundkörper 2 derart gezogen ist, dass sie sich zwischen Klemmeinrichtung 3 und Einführhalterung 4 befindet, wird durch das Seil 8 zusammengeschnürt und hierdurch in den Klemmraum bewegt bzw. eingeführt.

Nach Zusammenschnüren des Seils 8 kann der Anwender ein Ende des Seils, das beispielsweise in den ersten Seilführungsweg 49a führt, loslassen und das andere Ende solange ziehen, bis das Seil 8 über den zweiten Seilführungsweg 49b vollständig aus dem Klemmraum 310 entfernt ist.

Anschließend kann der Anwender das Seileinführungselement 49 aus seiner in den Klemmraum 310 versetzten Stellung zurück in seine Ausgangsstellung ziehen. Alternativ kann dies durch den bereits erwähnten Rückstellmechanismus geschehen.

Die schlauchförmige Folie befindet sich in dem jetzt erreichten Zustand eingefaltet innerhalb des Klemmraumes 310. Wenn der Anwender in diesem Zustand den Klemmring 31 in der ersten Richtung durch Drehen des Betätigungselementes 33 in Richtung des Befestigungsflansches 23 bewegt, wird die schlauchförmige Folie durch das Schließen des Klemmraumes 310 abgedichtet festgeklemmt. Zur Abdichtung kann der Klemmring 31 bevorzugt einen gewölbten Abschnitt 31a aufweisen, der in einen elastischen Dichtstreifen 311 bei Schließen des Klemmraumes 310 gedrückt wird.

Zur Unterstützung des Anwenders kann die Anschlussvorrichtung 1 bevorzugt eine Zugvorrichtung 5 aufweisen, die den Anwender bei dem Zusammenschnüren des Seils 8 unterstützt.

Eine erste Variante 5 einer Zugvorrichtung ist beispielsweise in Figuren 1, 7 und 9 gezeigt. Die dort gezeigte Zugvorrichtung 5 beinhaltet einen Hebel 51, der an dem Ringabschnitt 41 anliegt und eine Öffnung 52 aufweist, durch die hindurch das Seileinführungselement 49 verläuft.

Der Hebel 51 der Zugvorrichtung 5 ist um eine Drehachse 53 derart drehbar gelagert, dass der Hebel 51 in einer Ebene senkrecht zur Kanalachse A um die Drehachse 53 geschwenkt werden kann.

Auf einer dem Dichtflansch 44 abgewandten Seite des Seileinführungselements 49 beinhaltet die Zugvorrichtung 5 zwei Seilklemmen 54, die an einer drehbar gelagerten Platte 55 befestigt sind. Die drehbar gelagerte Platte 55 lässt sich durch Betätigen eines Drehgriffes 56 verdrehen.

Wenn sich das Seileinführungselement 49 in seiner versetzten Stellung befindet, in der sich das der Klemmeinrichtung 3 zugewandte Ende des Seileinführungselements 49 in dem Klemmraum 310 befindet, kann die drehbar gelagerte Platte 55 über den Drehgriff 56 so gedreht werden, dass die Seilklemmen 54 sich in der Ebene des Seils 8 befinden.

In diesem Zustand kann jedes der beiden Seilenden des Seils 8 in eine der Seilklemmen 54 eingesetzt werden, wodurch die Zugvorrichtung 5 mit dem Seil 8 verbunden ist. Wenn der Anwender nunmehr den Hebel 51 greift und um seine Drehachse 53 dreht, wird das in den Seilklemmen 54 befestigte Seil angezogen/zusammengeschnürt und aus dem Ringraum 48 heraus in den Klemmraum 310 versetzt.

Nach Anziehen des Seils 8 über den Hebel 51 kann dieser zurückgeführt und an den Ringabschnitt 41 wieder angelegt werden.

Das Seil 8 kann dann wie bereits erläutert aus dem Klemmraum 310 herausgezogen und das Seileinführungselement 49 ebenfalls wieder in seine Ursprungsstellung zurückversetzt werden.

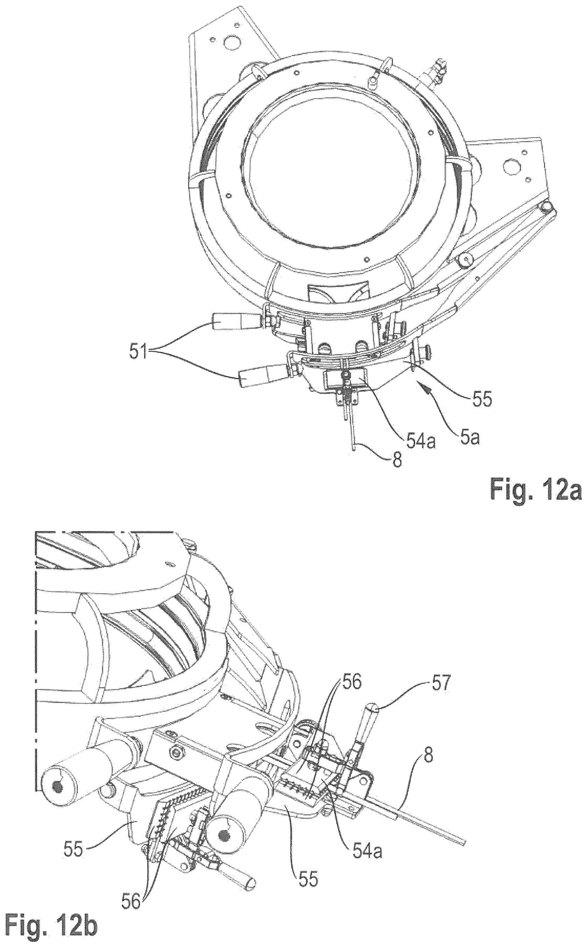

Eine zweite Variante 5a einer Zugvorrichtung ist in Figuren 12a und 12b gezeigt, wobei jede dieser Figuren die Zugvorrichtung 5a in zwei Zuständen zeigt.

Die zweite Variante der Zugvorrichtung 5a unterscheidet sich von der der ersten nur dadurch, dass die Seilklemmen 54 durch eine Klemmbackeneinrichtung 54a ersetzt wurden.

Wenn der Anwender die drehbar gelagerte Platte gedreht hat, befinden sich Klemmbacken 56 der Klemmbackeneinrichtung 54a, die bevorzugt mit Klemmrillen versehen sind, annähernd in der gleichen Ebene senkrecht zur Kanalachse A wie das Seil 8.

In diesem Zustand kann der Anwender das Seil 8 zwischen die Klemmbacken 56 legen und die Klemmbacken 56 mittels eines Klemmhebels 57 zusammendrücken, wodurch das Seil 8 festgeklemmt wird.

Anschließend kann der Anwender wieder den Hebel 51 betätigen, um das Seil 8 zusammenzuschnüren und aus dem Ringraum 48 in den Klemmraum 310 zu überführen.

### (seitlicher Eingriff 7)

Der Grundkörper 2 der Anschlussvorrichtung 1 beinhaltet bevorzugt einen seitlichen Eingriff 7, der unter Bezug auf Figuren 1, 5, 13a und 13b beschrieben wird.

Der seitliche Eingriff 7 dient dazu, einen in dem Klemmraum 310 festgeklemmten Folienrest, der von einer zuvor angeschlossenen schlauchförmigen Folie stammt zu entfernen. Damit das Entfernen des Folienrests kontaminationsfrei durchgeführt werden kann, ermöglicht der seitliche Eingriff 7 das Befestigen eines Foliensackes oder bevorzugt einer Endlosschlauchfolie 71.

Ein Ende der Endlosschlauchfolie 71 wird an dem seitlichen Eingriff 7 in einer ersten Nut 72 befestigt. Das andere Ende der Endlosschlauchfolie 71 wird zusammengebunden und verschlossen.

Der Anwender kann die Endlosschlauchfolie streckenweise von dem seitlichen Eingriff 7 abziehen und hierdurch in den Grundkörper 2 durch den seitlichen Eingriff 7 hindurch eingreifen, um den genannten Folienrest nach Öffnen des Klemmraumes 310 aus dem Grundkörper 2 herauszuziehen und in der abgezogenen Endlosschlauchfolie 71 durch einen ersten Verschluss einzuschließen. Die Endlosschlauchfolie 71 kann anschließend durch einen zweiten Verschluss wiederum abgebunden werden.

Zur Entsorgung des Folienrests wird die Endlosschlauchfolie 71 zwischen dem ersten und zweiten Verschluss durchtrennt.

Der seitliche Eingriff 7 kann bevorzugt durch einen Deckel 72 verschlossen werden, der dafür sorgt, dass sich kein Produkt in dem seitlichen Eingriff ansammelt. Der Deckel 72 wird bevorzugt an einer Abdeckung 73, die die Endlosschlauchfolie 71 abdeckt, lösbar arretiert.

Wenn die erfindungsgemäße Anschlussvorrichtung 1 an einer Einrichtung montiert ist, die ohnehin einen Eingriff hat, wie beispielsweise ein mit Handschuhen ausgestatteter Isolator, ist es nicht notwendig die Anschlussvorrichtung selbst mit dem Eingriff auszustatten.

Im Folgenden wird eine bestimmungsgemäße Verwendung der erfindungsgemäßen Anschlussvorrichtung 1 erläutert.

Die Anschlussvorrichtung eignet sich insbesondere zum Anschließen eines sogenannten Bigbags, der mit einem pulverartigen/granulatartigen Produkt zu füllen ist oder der mit einem solchen Produkt gefüllt und in eine Einrichtung zu entleeren ist.

Die erfindungsgemäße Anschlussvorrichtung 1 wird bevorzugt über ihren Montageflansch 22 an einer Einrichtung montiert.

Bei der Einrichtung kann es sich um eine Produktionsanlage oder ein Silo handeln, aus der/dem das Produkt in den Bigbag zu füllen ist oder in die/das der Bigbag zu entleeren ist.

Die Montage der Anschlussvorrichtung 1 erfolgt beispielsweise über Schraubverbindungen.

Bigbags sind mit schlauchförmigen Folien, die als Einlass/Auslass fungieren, ausgestattet.

Wenn ein Bigbag anzuschließen ist, wird in einem ersten Schritt das Seileinführungselement 49 in seine Ausgangsstellung gebracht oder befindet sich ohnehin in seiner Ausgangsstellung durch den Rückstellmechanismus.

Anschließend wird die Einführhalterung 4 durch Aktivieren der Führungseinrichtung 6 derart verfahren, dass sich die Einführhalterung 4 von der Öffnung 20a des Grundkörpers 2 entfernt. Dies wird durch Betätigen der Hubzylinder 61 durchgeführt.

Es wird von der Annahme ausgegangen, dass es sich bei dem Anschluss des Bigbags nicht um das allererste Anschließen eines Bigbags handelt. Aus diesem Grund verschließt ein Folienrest, der von einem zuvor gehandhabten Bigbag stammt, die Öffnung 20a in den Grundkörper 2, indem er in dem geschlossenen Klemmraum 310 zwischen Klemmring 31 und Befestigungsflansch 23 abgedichtet festgeklemmt ist.

Ein aus dem Klemmraum 310 herausragendes Ende des Folienrestes wird maximal in Richtung der Öffnung 20a des Grundkörpers 2 gestreift bzw. gefaltet.

Der Anwender führt die neue schlauchförmige Folie des gegenwärtig gehandhabten Bigbags durch den Dichtflansch 44/Dichtring hindurch und zieht die neue schlauchförmige Folie so weit über den Grundkörper 2, dass sie über den Folienrest hinaus den Grundkörper abdeckt.

In diesem Zustand betätigt der Anwender die Führungseinrichtung 6 und fährt die Einführhalterung maximal an den Grundkörper 2 heran. Dies wird durch Einziehen der Hubzylinder durchgeführt.

Anschließend betätigt der Anwender die erste Dichtung 46, wodurch die neue schlauchförmige Folie des gehandhabten Bigbags an den Befestigungsflansch 23 angedrückt und abgedichtet wird.

In diesem Zustand ist der Folienrest, der in dem Klemmraum 310 festgeklemmt ist, vollständig eingeschlossen, wodurch eine Kontamination des Anwenders vermieden wird.

Der Anwender kann nunmehr durch Greifen des Betätigungshebels 34, 35 das Betätigungselement 33 um die Kanalachse A drehen und somit den Klemmring 31 zum Öffnen des Klemmraumes 310 bewegen. Nach Öffnen des Klemmraumes 310 kann der Anwender mittels der Endlosschlauchfolie 71 durch den seitlichen Eingriff 7 hindurch in den Kanal des Grundkörpers 2 eingreifen und den Folienrest von der Öffnung 20a des Grundkörpers 2 abziehen und durch den seitlichen Eingriff 7 hindurch in die Endlosschlauchfolie 71 zur Entsorgung verbringen.

In einem nächsten Schritt führt der Anwender das Seil 8 über das Seileinführungselement 49 in den Ringraum 48 ein, wie es im Vorhergehenden erläutert wurde. Durch Zusammenschnüren des Seils 8 mit oder ohne Zuhilfenahme des Hebels 51 wird das Seil aus dem Ringraum 48 heraus in den Klemmraum 310 versetzt, wodurch die neue schlauchförmige Folie zusammengeschnürt und in den Klemmraum 310 eingeführt wird.

Der Anwender entfernt nunmehr das Seil 8 und das Seileinführungselement 49 aus dem Klemmraum 310, wie es im Vorhergehenden erläutert wurde, und schließt den Klemmraum 310 durch Drehen des Betätigungselementes 33 über die Betätigungshebel 34, 35.

Anschließend oder vor dem Einführen der schlauchförmigen Folie in den Klemmraum 310 kann die Blähdichtung 45, die in dem Dichtflansch 44/Dichtring sitzt, betätigt werden und hierdurch die schlauchförmige Folie des Bigbags an dem Grundkörper 2 abgedichtet fixiert werden.

Die zweite Dichtung 47 ist eine optionale Dichtung, die zur zusätzlichen Sicherung betätigt werden kann bzw. betätigt wird.

In diesem jetzt erreichten Zustand kann der Bigbag entweder entleert oder gefüllt werden, wobei hiernach die angeschlossene schlauchförmige Folie des Bigbags mittels zweier Verschlüsse zweifach verschlossen und zwischen den Verschlüssen durchtrennt werden kann.

Die Anschlussvorrichtung 1 ist nach dem Entfernen des gehandhabten Bigbags in ihrem Anfangszustand und bereit für den Anschluss eines neuen Bigbags.

Wenn keine hohen Kontaminationsanforderungen bestehen, beispielsweise bei Handhabung eines Bigbags mit relativ unbedenklichem Inhalt, kann die Anschlussvorrichtung auch nur mit der ersten Dichtung 46 und der Dichtung 45 des Dichtflansches betrieben werden.

Im Folgenden werden noch bevorzugte Reinigungseinrichtungen der erfindungsgemäßen Anschlussvorrichtung 1 erläutert, die rein optional sind.

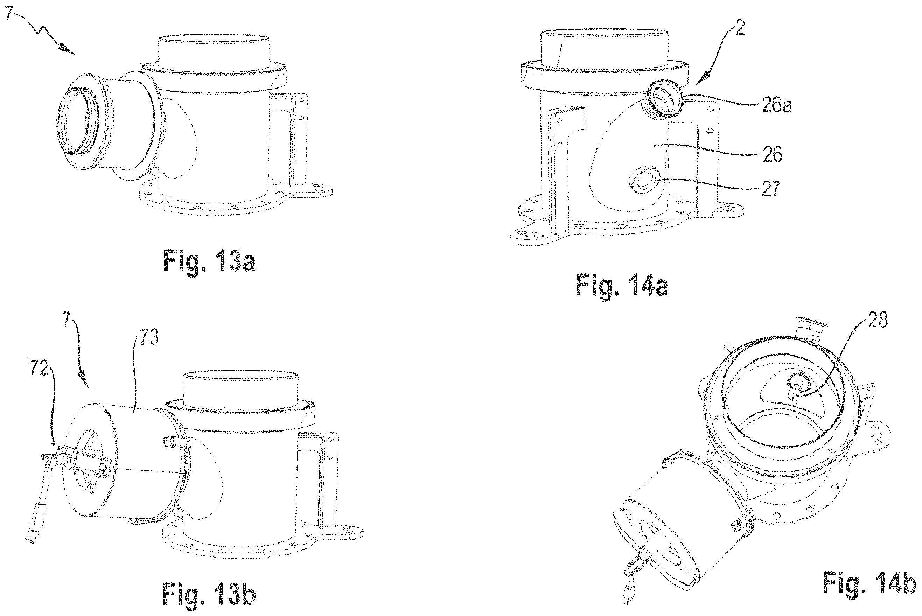

Wie aus Figur 14a ersichtlich ist, kann der Grundkörper 2 der erfindungsgemäßen Anschlussvorrichtung 1 bevorzugt einen Absauganschluss 26 aufweisen, der mit einem Befestigungsflansch 26a für den Anschluss einer Unterdruckquelle, beispielsweise über eine Triclampschelle, ausgestattet ist. Über den Absauganschluss 26 wird ein eventuell auftretender Überdruck innerhalb des Grundkörpers 2 abgebaut oder beispielsweise ein entleerter Bigbag evakuiert.

In dem Absauganschluss 26 ist eine Öffnung 27 ausgebildet, in die ein Sprühkopf 28 eingesetzt ist. Über diesen Sprühkopf 28 wird eine Reinigungsflüssigkeit in den Grundkörper 2 eingeleitet und zur Reinigung innerhalb des Grundkörpers 2 versprüht.

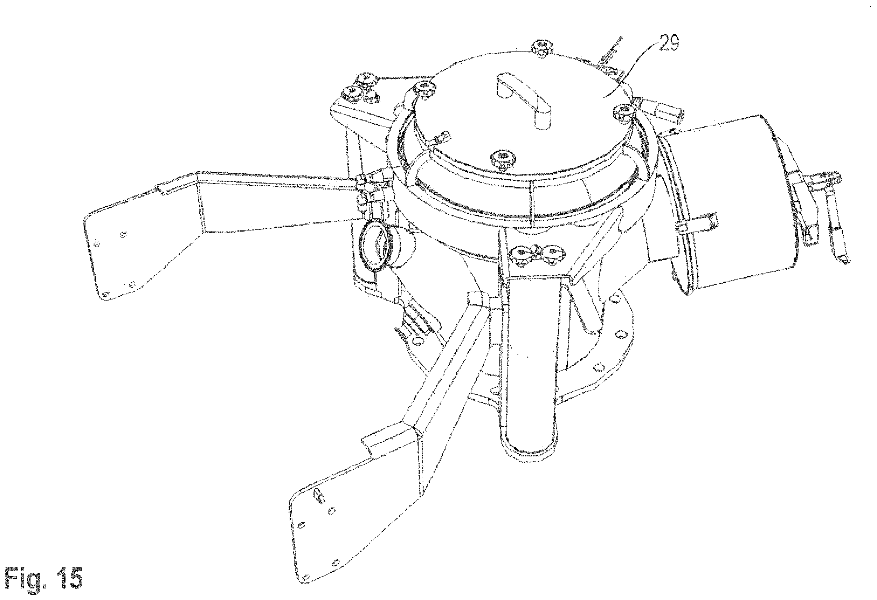

Während dieser Reinigung ist der Grundkörper 2 durch einen Flanschdeckel 29, der auf den Flansch 44 geschraubt ist, verschlossen (siehe Figur 15). Die unter Bezug auf Figuren 14 und 15 erläuterte Reinigung wird Wash in place genannt (WIP).

Alternativ hierzu kann die erfindungsgemäße Anschlussvorrichtung 1 durch eine aufwändigere Reinigungseinrichtung einer weitergehenden Reinigung unterzogen werden.

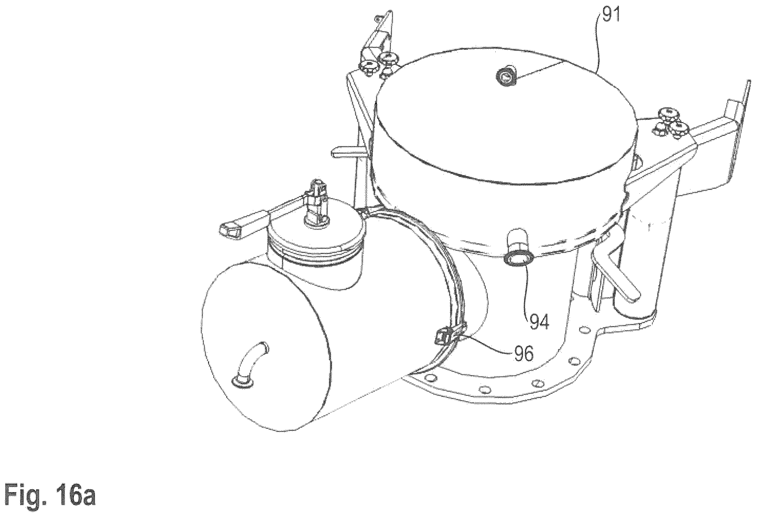

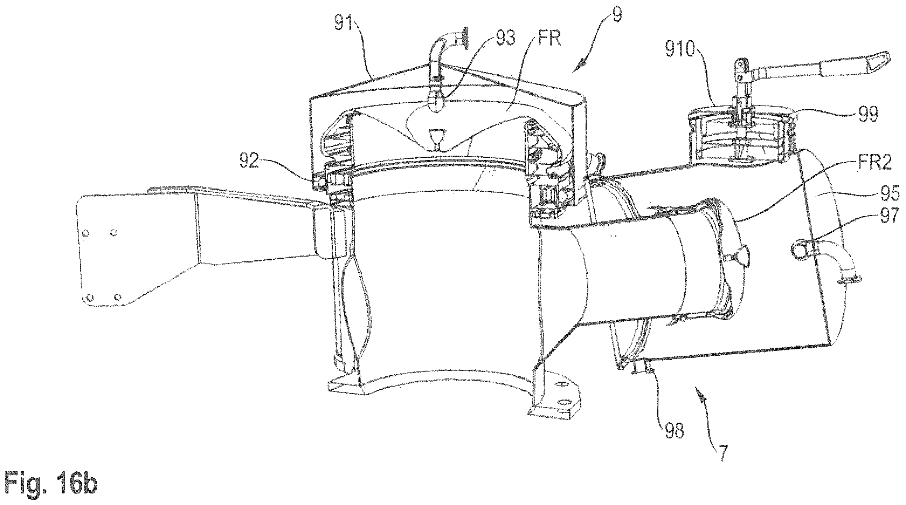

Figuren 16a und 16b zeigen die genannte aufwändigere Reinigungseinrichtung (CIP - clean in place). Diese Reinigungseinrichtung 9 beinhaltet eine Haube 91, die auf die Öffnung 20a des Grundkörpers 2 gesetzt und mittels einer Blähdichtung 92 an dem Befestigungsflansch 23 befestigt wird.

Die Haube 91 beinhaltet ebenfalls einen Sprühkopf 93, der im zentralen Bereich der Haube 91 so angeordnet ist, dass die über den Sprühkopf 93 eingeleitete und verteilte Reinigungsflüssigkeit auch den Bereich zwischen Klemmeinrichtung 3 und Haube 91 erreicht.

Darüber hinaus beinhaltet die Haube 91 einen Abfluss 94, über den die Reinigungsflüssigkeit, die sich zwischen Klemmeinrichtung 3 und Haube 91 befindet, ablaufen kann.

Der in Figur 16a gezeigte Folienrest FR kann vor Einleiten der Reinigungsflüssigkeit über den Sprühkopf 93 durch den seitlichen Eingriff 7 hindurch entfernt werden.

Zur Reinigung des seitlichen Eingriffes 7 kann die Reinigungseinrichtung 9 eine weitere Haube 95 aufweisen, die mittels Klemmen 96 an dem seitlichen Eingriff 7 befestigt wird.

Die weitere Haube 95 beinhaltet wiederum einen Sprühkopf 97, über den das Reinigungsmittel eingeleitet und verteilt werden kann, und ebenfalls einen entsprechenden Abfluss 98.

Damit ein den seitlichen Eingriff 7 verschließender Folienrest FR2 kontaminationsfrei entfernt werden kann, beinhaltet die Reinigungseinrichtung 9 einen Zugang 99, der durch einen Deckel 910 verschlossen ist und an dem ein Foliensack für den Eingriff in die Haube 95 befestigt werden kann.

### (Modifikationen)

Wenn die erfindungsgemäße Anschlussvorrichtung 1 geringere Kontaminationsanforderungen hat, kann die erste und zweite Dichtung und auch der Dichtflansch und die entsprechende Dichtung entfallen.

In diesem Fall ist nur die Klemmeinrichtung vorhanden, wobei zum Entfernen eines im Klemmraum festgeklemmten Folienrestes der Klemmraum zuerst geöffnet wird, anschließend die neue schlauchförmige Folie mittels des Seils in den Klemmraum eingeführt und vor Schließen des Klemmraums der Folienrest unter der durch das Seil gehaltenen neuen schlauchförmigen Folie herausgezogen wird.

## Patentansprüche

1. Anschlussvorrichtung (1) zum Anschließen einer schlauchförmigen Folie an eine Einrichtung, wobei die Anschlussvorrichtung (1) aufweist:
einen Grundkörper (2), der einen Kanal (21) ausbildet, wobei der Kanal (21) sich entlang einer Kanalachse (A) erstreckt und an einer Öffnung (20a) des Grundkörpers (2) endet und nach Außen mündet;
eine Klemmeinrichtung (3), die die Öffnung des Grundkörpers (2) umläuft und eingerichtet ist, die schlauchförmige Folie nach Überziehen über den Grundkörper (2) in einem Klemmraum (310) derart festzuklemmen, dass die schlauchförmige Folie abgedichtet befestigt ist und ein pulver-/granulatförmiges Produkt zwischen dem Grundkörper (2) und der schlauchförmigen Folie kontaminationsfrei überführt werden kann; und **gekennzeichnet durch**
ein Einführmittel (8), das den Grundkörper (2) und die über den Grundkörper (2) gezogene schlauchförmige Folie zumindest teilweise umläuft, wobei das Einführmittel (8) eingerichtet ist, sich radial zu der Kanalachse (A) derart zu versetzen, dass es die schlauchförmige Folie radial zusammenschnürt und hierdurch in den Klemmraum (310) einführt.

2. Anschlussvorrichtung (1) gemäß Patentanspruch 1, wobei
die Klemmeinrichtung (3) dazu eingerichtet ist, den Klemmraum (310) zu öffnen und nach dem radialen Einführen der schlauchförmigen Folie wieder zu schließen, um die schlauchförmige Folie in dem Klemmraum (310) festzuklemmen.

3. Anschlussvorrichtung (1) gemäß Patentanspruch 1 oder 2, wobei
die Klemmeinrichtung (3) zumindest einen bewegbaren Klemmring (31) aufweist; und
die Klemmeinrichtung (3) eingerichtet ist, den Klemmring (31) zum Schließen des Klemmraumes (310) in einer ersten Richtung der Kanalachse (A) zu bewegen und anschließend den Klemmring (31) zum Öffnen des Klemmraumes (310) in einer zu der ersten Richtung entgegengesetzten Richtung der Kanalachse (A) zu bewegen.

4. Anschlussvorrichtung (1) gemäß Patentanspruch 1 oder 2, wobei
die Klemmeinrichtung (3) zumindest eine in Richtung der Kanalachse (A) aufweitbare Blähdichtung aufweist; und
die Klemmeinrichtung (3) eingerichtet ist, die Blähdichtung zum Öffnen und Schließen des Klemmraumes (310) zu betätigen.

5. Anschlussvorrichtung (1) gemäß Patentanspruch 3, wobei
die Klemmeinrichtung (3) zumindest ein Betätigungselement (33) aufweist, das den Grundkörper (2) zumindest teilweise umläuft und durch einen Anwender verstellt werden kann; und
die Klemmeinrichtung (3) eingerichtet ist, dass sich der Klemmring (31) bei Verstellen des Betätigungselements (33) bewegt.

6. Anschlussvorrichtung (1) gemäß Patentanspruch 5, wobei
der Grundkörper (2) einen Befestigungsflansch (23) aufweist, an dem das Betätigungselement (33) über eine Gleitlagerung derart befestigt ist, dass das Betätigungselement (33) durch den Anwender um die Kanalachse (A) herum verstellt werden kann; und
die Klemmeinrichtung (3) zumindest einen Stössel (32) aufweist, der an dem Betätigungselement (33) über eine Kulissenführung (36) gleitend gelagert befestigt ist, den Befestigungsflansch (23) durchsetzt und an dem Klemmring (31) befestigt ist; wobei
bei Verstellen des Betätigungselements (33) in einer ersten Betätigungsrichtung der Stößel (32) aufgrund der Kulissenführung (36) den Klemmring (31) zum Schließen des Klemmraumes (310) in der ersten Richtung bewegt, und bei Verstellen des Betätigungselements (33) in einer zweiten Betätigungsrichtung der Stößel (32) aufgrund der Kulissenführung (36) den Klemmring (31) zum Öffnen des Klemmraumes (310) in der zweiten Richtung bewegt.

7. Anschlussvorrichtung (1) gemäß einem der Patentansprüche 1 bis 6, weiterhin aufweisend:
eine Einführhalterung (4), die die Klemmeinrichtung (3) umläuft und das Einführmittel (8) derart haltert, dass das Einführmittel (8) in den Klemmraum (310) radial zu der Kanalachse (A) versetzbar ist, um die schlauchförmige Folie in den Klemmraum (310) einzuführen; und
eine erste Dichtung (46), die den Grundkörper (2) umläuft und eingerichtet ist, eine neue schlauchförmige Folie abgedichtet zu befestigen, wobei die erste Dichtung (46) derart angeordnet ist, dass die neue schlauchförmige Folie so befestigt werden kann, dass sie einen in dem Klemmraum (310) festgeklemmten schlauchförmigen Folienrest, der von einer zuvor angeschlossenen schlauchförmigen Folie stammt, einschließt.

8. Anschlussvorrichtung (1) gemäß Patentanspruch 7, wobei
das Einführmittel ein Seil (8) ist; und
die Einführhalterung (4) ringförmig ist und einen Ringraum (48) aufweist, wobei
das Seil (8) in den Ringraum (48) von außerhalb eingeführt und anschließend durch Ziehen von außerhalb derart radial zu der Kanalachse (A) zusammengeschnürt werden kann, dass es in den Klemmraum (310) versetzt wird und hierdurch die schlauchförmige Folie in den Klemmraum (310) einführt.

9. Anschlussvorrichtung (1) gemäß Patentanspruch 7 oder 8, wobei
die Einführhalterung (4) ein Seileinführungselement (49) aufweist, das radial zu der Kanalachse (A) verstellbar die Einführhalterung (4) durchsetzt und einen ersten Seilführungsweg (49a) und einen zweiten Seilführungsweg (49b) definiert; wobei,
wenn sich das Seileinführungselement (49) in einer Ausgangsstellung befindet und das Seil (8) über den ersten Seilführungsweg (49a) eingeführt wird, das Seil in den Ringraum (48) geleitet und nach Durchlaufen des Ringraums (48) über den zweiten Seilführungsweg (49b) wieder nach Außen geleitet wird; und
bei dem Zusammenschnüren des Seils (8) das Seilführungselement (49) aus seiner Ausgangsstellung heraus zusammen mit dem Seil (8) in den Klemmraum (310) versetzt wird.

10. Anschlussvorrichtung (1) gemäß Patentanspruch 8 oder 9, wobei
die Einführhalterung (4) eine manuelle oder motorische Zugvorrichtung (5) aufweist, die eingerichtet ist, das Seil (8) zusammen mit dem Seileinführungselement (49) in den Klemmraum (310) zu versetzen.

11. Anschlussvorrichtung (1) gemäß einem der Patentansprüche 7 bis 10, wobei die Zugvorrichtung (5) ein manuell betätigbarer Hebel (51) ist und zumindest eine Seilklemme (54) aufweist, in der das Seil (8) für das Ziehen einklemmbar ist.

12. Anschlussvorrichtung (1) gemäß einem der Patentansprüche 7 bis 11, wobei
die Einführhalterung (4) in Richtung der Kanalachse (A) durch eine Führungseinrichtung (6) verfahrbar ist und einen Dichtflansch (44) mit einer Dichtung (45) trägt, über die die schlauchförmige Folie, wenn die Einführhalterung (4) maximal an den Grundkörper (2) heran verfahren ist, an einem die Öffnung (20a) festlegenden Rand des Grundkörpers (2) abdichtbar ist; und
die Dichtung (45) des Dichtflansches derart eingerichtet ist, dass sie die schlauchförmige Folie abdichtet, wenn der Klemmraum (310) geschlossen wird.

13. Anschlussvorrichtung (1) gemäß einem der Patentansprüche 7 bis 12, wobei die erste Dichtung (46) derart eingerichtet ist, dass sie die schlauchförmige Folie abdichtet, wenn der Klemmraum (310) geöffnet wird.

14. Anschlussvorrichtung (1) gemäß Patentanspruch 7, wobei
das Einführmittel (8) eine Vielzahl von Einführelementen aufweist, die um die Klemmeinrichtung (3) herum angeordnet sind und jeweils durch die Einführhalterung (4) radial zu der Kanalachse versetzbar gelagert sind und jeweils an einem dem Grundkörper (2) zugewandten Ende mindestens eine zu der Kanalachse (A) radiale Aussparung aufweisen;
die Einführelemente eingerichtet sind, radial zu der Kanalachse (A) derart versetzt zu werden, dass sie mit dem Ende die schlauchförmige Folie radial zusammenschnüren und hierdurch in den Klemmraum einführen; und
die Klemmeinrichtung (3) eingerichtet ist, Teile der schlauchförmigen Folie, die sich jeweils in den Aussparungen befinden, festzuklemmen, bevor der Klemmraum (310) geschlossen ist.

## Claims

1. A connection device (1) for connecting a tubular film to an apparatus, wherein the connection device (1) comprises:
a base body (2), which forms a channel (21), wherein the channel (21) extends along a channel axis (A) and ends at an opening (20a) of the base body (2) and emerges to the exterior;
a clamping device (3), which surrounds the opening of the base body (2) and which is designed to clamp the tubular film, after it has been pulled over the base body (2), in a clamping space (310), in such a way that the tubular film is fastened in a sealed manner and a powdered/granulated product can be transferred contamination-free between the base body (2) and the tubular film; and **characterised in that** an introduction means (8), which at least partially surrounds the base body (2) and the tubular film pulled over the base body (2), wherein the introduction means (8) is designed to be displaced radially with respect to the channel axis (A), in such a way that it constricts the tubular film radially and thereby introduces it into the clamping space (310).

2. The connection device (1) according to claim 1,
wherein
the clamping device (3) is designed to open the clamping space (310) and to close the latter again after the radial introduction of the tubular film in order to clamp the tubular film in the clamping space (310).

3. The connection device (1) according to claim 1 or 2,
wherein
the clamping device (3) comprises at least one movable clamping ring (31); and
the clamping device (3) is designed to move the clamping ring (31) in a first direction of the channel axis (A) for closing the clamping space (310) and then to move the clamping ring (31) in a direction of the channel axis (A) opposite to the first direction for opening the clamping space (310).

4. The connection device (1) according to claim 1 of 2,
wherein
the clamping device (3) comprises at least one inflatable seal which can be widened in the direction of the channel axis (A); and
the clamping device (3) is designed to actuate the inflatable seal for opening and closing the clamping space (310).

5. The connection device (1) according to claim 3,
wherein
the clamping device (3) comprises at least one actuating element (33), which at least partially surrounds the base body (2) and can be shifted by a user; and
the clamping device (3) is designed such that the clamping ring (31) moves when the actuating element (33) is shifted.

6. The connection device (1) according to claim 5,
wherein
the base body (2) comprises an attachment flange (23), to which the actuating element (33) is attached via a slide bearing, in such a way that the actuating element (33) can be moved around the channel axis (A) by the user; and
the clamping device (3) comprises at least one tappet (32), which is attached slidably mounted via a connecting link guide (36) to the actuating element (33), penetrates the attachment flange (23) and is attached to the clamping ring (31); wherein
when the actuating element (33) is shifted in a first actuating direction, the tappet (32) moves the clamping ring (31), thanks to the connecting link guide (36), in the first direction for closing the clamping space (310) and when the actuating element (33) is shifted in a second actuating direction, the tappet (32) moves the clamping ring (31), thanks to the connecting link guide (36), in the second direction for opening the clamping space (310).

7. The connection device (1) according to any one of claims 1 to 6, further comprising:
an introduction holding fixture (4), which surrounds the clamping device (3) and holds the introduction means (8) in such a way that the introduction means (8) can be moved into the clamping space (310) radially with respect to the channel axis (A), in order to introduce the tubular film into the clamping space (310); and
a first seal (46), which surrounds the base body (2) and is designed to fasten a new tubular film in a sealed manner, wherein the first seal (46) is arranged such that the new tubular film can be fastened in such a way that it includes a tubular film remnant clamped in the clamping space (310) that originates from a previously adjoining tubular film.

8. The connection device (1) according to claim 7,
wherein
the introduction means is a cable (8); and
the introduction holding fixture (4) is annular and comprises an annular space (48), wherein
the cable (8) can be introduced into the annular space (48) from outside and can then be tied up by pulling from outside radially with respect to the channel axis
(A), in such a way that it is moved into the clamping space (310) and thus introduces the tubular film into the clamping space (310).

9. The connection device (1) according to claim 7 or 8,
wherein
the introduction holding fixture (4) comprises a cable introduction element (49), which penetrates the introduction holding fixture (4) in a radially adjustable manner with respect to channel axis (A) and defines a first cable guide path (49a) and a second cable guide path part (49b); wherein,
when the cable introduction element (49) is in an initial position and the cable (8) is introduced via the first cable guide path (49a), the cable is conveyed into the annular space (48) and, after passing through the annular space (48), is conveyed outwards again via the second cable guide path (49b); and
when the cable (8) is tied up, the cable introduction element (49) is displaced out of its initial position together with the cable (8) into the clamping space (310) .

10. The connection device (1) according to claim 8 or 9,
wherein
the introduction holding fixture (4) comprises a manual or motor-driven pulling device (5) which is designed to displace the cable (8) together with the cable introduction element (49) into the clamping space (310).

11. The connection device (1) according to any one of claims 7 to 10,
wherein
the pulling device (5) is a manually operated lever (51) and comprises at least one cable clamp (54), in which the cable (8) can be clamped for the pulling.

12. The connection device (1) according to any one of claims 7 to 11,
wherein
the introduction holding fixture (4) can be moved in the direction of the channel axis (A) by means of a guide device (6) and carries a sealing flange (44) with a seal (45), by means of which the tubular film, when the introduction holding fixture (4) is moved to the maximum towards the base body (2), can be sealed at an edge of the base body (2) defining the opening (20a); and
the seal (45) of the sealing flange is designed such that it seals the tubular film when the clamping space (310) is closed.

13. The connection device (1) according to any one of claims 7 to 12, wherein the first seal (46) is designed such that it seals the tubular film when the clamping space (310) is opened.

14. The connection device (1) according to claim 7,
wherein
the introduction means (8) comprises a multiplicity of introduction elements, which are arranged around the clamping device (3) and are each mounted radially displaceable with respect to the channel axis by means of the introduction holding fixture (4) and each comprise at least one recess radial with respect to the channel axis (A) at an end facing the base body (2) ;
the introduction elements are designed to be displaced radially with respect to the channel axis (A) in such a way that they tie up the tubular film radially with the end and thus introduce it into the clamping space; and
the clamping device (3) is designed to clamp parts of the tubular film, which in each case are present in the recesses, before the clamping space (310) is closed.

## Revendications

1. Dispositif de raccordement (1) destiné à raccorder une feuille tubulaire à un équipement, dans lequel le dispositif de raccordement (1) présente :
un corps de base (2), qui forme un canal (21), dans lequel le canal (21) s'étend le long d'un axe de canal (A) et termine au niveau d'une ouverture (20a) du corps de base (2) et débouche vers l'extérieur ;
un dispositif de coincement (3), qui fait le tour de l'ouverture du corps de base (2) et est conçu pour coincer la feuille tubulaire dans un espace de coincement (310)une fois celle-ci étendue sur le corps de base (2), de telle sorte que la feuille tubulaire est fixée de manière étanchéifiée et qu'un produit pulvérulent/granulaire peut être transféré sans contamination entre le corps de base (2) et la feuille tubulaire ; et **caractérisé par**
un moyen d'introduction (8), qui fait au moins en partie le tour du corps de base (2) et de la feuille tubulaire étendue sur le corps de base (2), dans lequel le moyen d'introduction (8) est conçu pour se déplacer radialement par rapport à l'axe de canal (A), de telle sorte qu'il serre radialement la feuille tubulaire et l'introduit ainsi dans l'espace de coincement (310).

2. Dispositif de raccordement (1) selon la revendication 1, dans lequel
le dispositif de coincement (3) est conçu pour ouvrir l'espace de coincement (310) et pour le refermer après l'introduction radiale de la feuille tubulaire, afin de coincer la feuille tubulaire dans l'espace de coincement (310).

3. Dispositif de raccordement (1) selon la revendication 1 ou 2, dans lequel
le dispositif de coincement (3) présente au moins une bague de coincement (31) mobile ; et
le dispositif de coincement (3) est conçu pour déplacer la bague de coincement (31) dans une première direction de l'axe de canal (A) pour la fermeture de l'espace de coincement (310), et ensuite pour déplacer la bague de coincement (31) dans une direction de l'axe de canal (A) opposée à la première direction pour l'ouverture de l'espace de coincement (310).

4. Dispositif de raccordement (1) selon la revendication 1 ou 2, dans lequel
le dispositif de coincement (3) présente au moins un joint gonflable pouvant être élargi en direction de l'axe de canal (A) ; et
le dispositif de coincement (3) est conçu pour actionner le joint gonflable pour l'ouverture et la fermeture de l'espace de coincement (310).

5. Dispositif de raccordement (1) selon la revendication 3, dans lequel
le dispositif de coincement (3) présente au moins un élément d'actionnement (33), qui fait au moins en partie le tour du corps de base (2) et peut être déplacé par un utilisateur ; et
le dispositif de coincement (3) est conçu pour que la bague de coincement (31) se déplace lors du déplacement de l'élément d'actionnement (33).

6. Dispositif de raccordement (1) selon la revendication 5, dans lequel
le corps de base (2) présente une bride de fixation (23), sur laquelle l'élément d'actionnement (33) est fixé par l'intermédiaire d'un palier lisse de telle sorte que l'élément d'actionnement (33) peut être déplacé par l'utilisateur autour de l'axe de canal (A) ; et
le dispositif de coincement (3) présente au moins un poussoir (32), qui est fixé sur l'élément d'actionnement (33) de manière à être monté coulissant par l'intermédiaire d'un guide à coulisse (36), traverse la bride de fixation (23) et est fixé à la bague de coincement (31) ; dans lequel
lors du déplacement de l'élément d'actionnement (33) dans une première direction d'actionnement, le poussoir (32), à l'aide du guide à coulisse (36), déplace la bague de coincement (31) dans la première direction pour la fermeture de l'espace de coincement (310), et, lors du déplacement de l'élément d'actionnement (33) dans une deuxième direction d'actionnement, le poussoir (32), à l'aide du guide à coulisse (36), déplace la bague de coincement (31) dans la deuxième direction pour l'ouverture de l'espace de coincement (310).

7. Dispositif de raccordement (1) selon l'une quelconque des revendications 1 à 6, présentant en outre :
un élément de retenue d'introduction (4), qui fait le tour du dispositif de coincement (3) et retient le moyen d'introduction (8) de telle sorte que le moyen d'introduction (8) peut être déplacé radialement par rapport à l'axe de canal (A) dans l'espace de coincement (310), afin d'introduire la feuille tubulaire dans l'espace de coincement (310); et
un premier joint (46), qui fait le tour du corps de base (2) et est conçu pour fixer une nouvelle feuille tubulaire de manière étanche, dans lequel le premier joint (46) est disposé de telle sorte que la nouvelle feuille tubulaire peut être fixée, de sorte qu'elle renferme un reste de feuille tubulaire coincé dans l'espace de coincement (310), qui provient d'une feuille tubulaire préalablement raccordée.

8. Dispositif de raccordement (1) selon la revendication 7, dans lequel
le moyen d'introduction est une corde (8) ; et l'élément de retenue d'introduction (4) est annulaire et présente un espace annulaire (48), dans lequel
la corde (8) est introduite de l'extérieur dans l'espace annulaire (48) puis peut être serrée par traction de l'extérieur radialement par rapport à l'axe de canal (A), de telle sorte qu'elle est déplacée dans l'espace de coincement (310) et introduit ainsi la feuille tubulaire dans l'espace de coincement (310).

9. Dispositif de raccordement (1) selon la revendication 7 ou 8, dans lequel
l'élément de retenue d'introduction (4) présente un élément d'introduction de corde (49), qui traverse l'élément de retenue d'introduction (4) de manière mobile radialement par rapport à l'axe de canal (A) et définit un premier trajet de guidage de corde (49a) et un deuxième trajet de guidage de corde (49b) ; dans lequel
lorsque l'élément d'introduction de corde (49) se trouve dans une position de départ et que la corde (8) est introduite par l'intermédiaire du premier trajet de guidage de corde (49a), la corde est acheminée dans l'espace annulaire (48) et, après être passée par l'espace annulaire (48), est acheminée à nouveau vers l'extérieur par l'intermédiaire du deuxième trajet de guidage de corde (49b) ; et
lors du serrage de la corde (8), l'élément de guidage de corde (49) est déplacé hors de sa position de départ, conjointement avec la corde (8), dans l'espace de coincement (310).

10. Dispositif de raccordement (1) selon la revendication 8 ou 9, dans lequel
l'élément de retenue d'introduction (4) présente un dispositif de traction (5) manuel ou moteur, qui est conçu pour amener la corde (8) conjointement avec l'élément d'introduction de corde (49) dans l'espace de coincement (310).

11. Dispositif de raccordement (1) selon l'une quelconque des revendications 7 à 10, dans lequel le dispositif de traction (5) est un levier (51) pouvant être actionné manuellement et présente au moins un coince-corde (54), dans lequel la corde (8) peut être coincée pour la traction.

12. Dispositif de raccordement (1) selon l'une quelconque des revendications 7 à 11, dans lequel
l'élément de retenue d'introduction (4) peut être déplacé en direction de l'axe de canal (A) par un dispositif de guidage (6) et porte une bride d'étanchéité (44) avec un joint (45), par l'intermédiaire duquel la feuille tubulaire, lorsque l'élément de retenue d'introduction (4) est rapproché au maximum du corps de base (2), peut être étanchéifiée au niveau d'un bord, déterminant l'ouverture (20a), du corps de base (2) ; et
le joint (45) de la bride d'étanchéité est conçu de telle sorte qu'il étanchéifie la feuille tubulaire, lorsque l'espace de coincement (310) est fermé.

13. Dispositif de raccordement (1) selon l'une quelconque des revendications 7 à 12, dans lequel le premier joint (46) est conçu de telle sorte qu'il étanchéifie la feuille tubulaire lorsque l'espace de coincement (310) est ouvert.

14. Dispositif de raccordement (1) selon la revendication 7, dans lequel
le moyen d'introduction (8) présente une pluralité d'éléments d'introduction, qui sont disposés autour du dispositif de coincement (3) et sont montés respectivement de manière à pouvoir être déplacés par l'élément de retenue d'introduction (4) radialement par rapport à l'axe de canal (A) et présentent respectivement à une extrémité tournée vers le corps de base (2) au moins un évidement radial par rapport à l'axe de canal (A) ;
les éléments d'introduction sont conçus pour être déplacés radialement par rapport à l'axe de canal (A), de telle sorte que, avec l'extrémité, ils serrent radialement la feuille tubulaire et l'introduisent ainsi dans l'espace de coincement ; et
le dispositif de coincement (3) est conçu pour coincer des parties de la feuille tubulaire qui se trouvent respectivement dans les évidements, avant que l'espace de coincement (310) ne soit fermé.
